# FASCICULE DE BREVET EUROPEEN

(11) **EP 4 479 300 B1**
(45) Date de publication et mention de la délivrance du brevet: **28.01.2026**
(21) Numéro de dépôt: 23708856.2
(22) Date de dépôt: 17.02.2023
(51) Int. Cl.: B63B 15/02, B63H 9/061

(54) **BARRE DE FLÈCHE PIVOTANTE POUR UNE VOILE RIGIDE**
SCHWENKBARER SPREIZSTAB FÜR EIN STARRES SEGEL
PIVOTING SPREADER BAR FOR A RIGID SAIL

(30) Priorité: 17.02.2022 FR 2201428
(43) Date de publication de la demande: 25.12.2024
(73) Titulaire: Ship ST, 56100 Lorient (FR)
(72) Inventeur: MERMIER, Laurent, 56290 PORT-LOUIS (FR); DASSONVILLE, Maxime, 56100 LORIENT (FR)
(74) Mandataire: Regimbeau
(86) Numéro de dépôt international: PCT/FR2023/050225
(87) Numéro de publication internationale: WO 2023/156747

(56) Documents cités:
- EP-B1- 2 822 851
- WO-A1-2016/174483
- WO-A1-2018/039705
- DE-A1- 4 231 597
- US-A1- 2017 369 139

## Description

### DOMAINE DE L'INVENTION

La présente invention concerne un ensemble pour propulsion vélique pour un navire, et un navire comprenant un tel ensemble pour propulsion vélique.

### ETAT DE LA TECHNIQUE

Un navire comprend classiquement un ensemble de propulsion vélique comprenant au moins une voile, qui permet de faire avancer le navire sous l'action du vent.

Certains ensembles de propulsion vélique peuvent comprendre une ou plusieurs voiles rigides. Les voiles rigides permettent d'améliorer l'efficacité aérodynamique, mais entraînent des contraintes de rangement spécifiques, leur caractère rigide leur empêchant d'être affalées comme des voiles classiques.

Les documents EP 2 903 890, WO 2018/039705 et EP 2 822 851 décrivent des voiles rigides, montée sur des bases permettant de les coucher sur le pont du navire en les faisant pivoter. Une ou plusieurs barres de flèches sont classiquement montées sur le mât pour raidir le mât, notamment dans le cadre d'ensembles de propulsion véliques comprenant des voiles non rigides. Les barres de flèche s'étendent perpendiculairement à l'axe principal de la voile. Les documents FR 2 650 801 et DE 8 203 269 décrivent des ensembles de propulsion véliques comprenant des voiles non rigides, et des barres de flèche montées sur le mât et présentant une inclinaison qui est réglable dans une certaine mesure pour le contrôle des voiles.

Le document US 2017/369139 A1 décrit une ensemble de propulsion vélique comprenant une voile rigide montée sur un mât et trois haubans de chaque coté du mât.

Néanmoins, ces ensembles de propulsion vélique ne sont adaptés qu'à des voiles non rigides, et non à des voiles rigides. Or, pour un ensemble de propulsion vélique comprenant une voile rigide, la présence de barres de flèches contraint encore davantage le rangement de la voile. En effet, la barre de flèche augmente l'encombrement de la voile couchée, puisque la barre de flèche est perpendiculaire au plan de la voile rigide.

### EXPOSE DE L'INVENTION

Un objectif de la présente invention est de proposer un ensemble de propulsion vélique présentant une résistance mécanique améliorée, en particulier une résistance mécanique améliorée en flexion.

Un autre objectif de l'invention est de proposer un ensemble de propulsion vélique permettant d'optimiser le rangement de la voile rigide couchée.

Selon un premier aspect, l'invention concerne un ensemble de propulsion vélique pour un navire, comprenant :
- une voile rigide formant une aile à profil aérodynamique, la voile rigide comprenant une paroi s'étendant principalement selon un axe de voile,
- au moins une barre de flèche adaptée pour être montée pivotante par rapport à la paroi de la voile rigide, entre une position de navigation dans laquelle la barre de flèche s'étend sensiblement perpendiculairement à la paroi de la voile rigide, et une position de rangement dans laquelle la barre de flèche s'étend sensiblement contre la paroi de la voile rigide, et
- au moins deux haubans montés sur la barre de flèche, dans lequel lorsque la barre de flèche est dans la position de navigation, les haubans s'étendent sensiblement à distance de la paroi de la voile rigide, et lorsque la barre de flèche est dans la position de rangement, les haubans s'étendent sensiblement contre la paroi de la voile rigide.

Certaines caractéristiques préférées mais non limitatives de l'ensemble de propulsion vélique décrit ci-dessus sont les suivantes, prises individuellement ou en combinaison :
- la barre de flèche est inclinée de moins de 10° par rapport à un plan normal à l'axe de voile, par exemple s'étend sensiblement dans le plan normal à l'axe de voile ;
- la barre de flèche est déplacée entre la position de navigation et la position de rangement par pivotement autour d'un axe de pivotement de la barre de flèche, ledit axe de pivotement de la barre de flèche étant incliné de moins de 10° par rapport à l'axe de voile, par exemple correspondant sensiblement à l'axe de voile ;
- chaque voile rigide comprend un mécanisme de rotation comprenant un pivot orienté suivant l'axe de pivotement de la barre de flèche, et un actionneur adapté pour entraîner une barre de flèche correspondante en rotation de sorte à régler la position de la barre de flèche correspondante entre la position de navigation et la position de rangement ;
- le pivot du mécanisme de rotation comprend deux chapes rigidement fixées à une paroi de la voile rigide et disposées de part et d'autre de la barre de flèche correspondante ;
- dans la position de rangement, la barre de flèche et/ou les haubans est/sont au moins partiellement au contact de la voile rigide ;
- la barre de flèche est adaptée pour être montée pivotante entre la position de navigation et la position de rangement autour d'un axe de pivotement de la barre de flèche au niveau d'un point de pivotement, les haubans étant montés sur la barre de flèche et étant montés en outre sur la voile rigide au niveau de points de connexion respectifs, dans lequel le point de pivotement de la barre de flèche est aligné avec les points de connexion des haubans le long de l'axe de voile, de sorte que les haubans restent tendus que la barre de flèche soit dans la position de navigation ou dans la position de rangement ;
- l'ensemble comprend une pluralité de barres de flèche et une pluralité de haubans, chaque barre de flèche de la pluralité de barres de flèches étant adaptée pour être montée pivotante par rapport à la paroi de la voile rigide au niveau d'un mécanisme de rotation correspondant de la barre de flèche, chaque barre de flèche étant montée pivotante entre la position de navigation et la position de rangement autour d'un axe de pivotement de la barre de flèche au niveau d'un point de pivotement de la barre de flèche, chaque hauban de la pluralité de haubans étant monté sur une barre de flèche, au moins deux haubans de la pluralité de haubans étant adaptés pour être montés en outre sur la voile rigide au niveau de points de connexion respectifs, dans lequel les points de pivotement des barres de flèche sont alignés entre eux et sont alignés avec les points de connexion des haubans le long de l'axe de voile, de sorte que les haubans restent tendus, que la barre de flèche soit dans la position de navigation ou dans la position de rangement ;
- la voile rigide comprend une première paroi et une deuxième paroi, l'ensemble comprend :
   - une pluralité de premières barres de flèche, respectivement de deuxièmes barres de flèches, adaptées pour être montées pivotantes par rapport à la première paroi, respectivement à la deuxième paroi, entre la position de navigation et la position de rangement, et
   - une pluralité de premiers haubans, respectivement de deuxièmes haubans, chaque hauban de la pluralité de premiers haubans, respectivement de deuxièmes haubans, étant monté sur au moins l'une des barres de flèches de la pluralité de premières barres de flèche, respectivement de deuxièmes barres de flèches,
et la voile rigide comprend :
- une configuration de navigation, dans laquelle la pluralité de premières barres de flèches et la pluralité de deuxièmes barres de flèches sont dans la position de navigation, et
- une configuration de rangement, dans laquelle la pluralité de premières barres de flèches et la pluralité de deuxièmes barres de flèches sont dans la position de rangement ;
- la voile rigide est montée pivotante autour d'un axe de pivotement de couchage, un changement de position de la voile rigide entre une position hissée et une position couchée comprenant un pivotement de la voile rigide autour de l'axe de pivotement de couchage, dans lequel dans la position hissée, l'axe de voile est sensiblement perpendiculaire à un plan de navire formé par l'axe de pivotement de couchage et un axe de navire, et dans la position couchée, l'axe de voile est sensiblement parallèle au plan de navire ;
- l'ensemble comprend en outre une embase, la voile rigide étant montée sur l'embase, l'embase comprenant un élément rotatif monté pivotant autour de l'axe de voile de sorte qu'un pivotement de l'élément rotatif règle une incidence de la voile rigide lorsque la voile rigide est dans la position hissée, dans lequel la voile rigide est montée sur l'embase de manière solidaire de l'embase en rotation autour de l'axe de voile lorsque la voile rigide est dans la position hissée et de manière pivotante par rapport à l'embase autour de l'axe de pivotement de couchage ;
- l'ensemble comprend en outre au moins un panneau photovoltaïque adapté pour être monté sur la paroi de la voile rigide.

Selon un deuxième aspect, l'invention concerne un navire comprenant un ensemble de propulsion vélique selon le premier aspect, ledit ensemble de propulsion vélique comprenant une ou plusieurs voiles rigides.

### DESCRIPTION DES FIGURES

D'autres caractéristiques, buts et avantages de la présente invention apparaîtront à la lecture de la description détaillée qui va suivre, donnée à titre d'exemple non limitatif, qui sera illustrée par les figures suivantes :
La figure 1 est une vue en perspective schématique d'une voile rigide d'un ensemble de propulsion vélique selon un mode de réalisation de l'invention, la voile rigide étant représentée dans la position hissée et dans la position couchée.
La figure 2a et la figure 2b sont des vues schématiques, respectivement de côté et en perspective, d'un navire comprenant un ensemble de propulsion vélique selon un mode de réalisation de l'invention, l'ensemble de propulsion vélique comprenant des voiles rigides de différentes hauteurs, les voiles rigides étant dans la position hissée.
La figure 3 est une vue en perspective schématique d'un navire comprenant un ensemble de propulsion vélique selon un mode de réalisation de l'invention, l'une des voiles rigides de l'ensemble de propulsion vélique étant dans la position hissée tandis que les autres voiles rigides de l'ensemble de propulsion vélique sont dans la position couchée.
La figure 4a et la figure 4b sont des vues schématiques, respectivement de dessus et de devant, d'un navire comprenant un ensemble de propulsion vélique selon un mode de réalisation de l'invention, l'ensemble de propulsion vélique comprenant des voiles rigides couchées en épi, les voiles rigides étant dans la position couchée en tuilage.
La figure 5a et la figure 5b sont des vues schématiques, respectivement de côté et de dessus, d'un navire comprenant un ensemble de propulsion vélique selon un mode de réalisation de l'invention, l'ensemble de propulsion vélique comprenant des voiles rigides couchées en épi, les voiles rigides étant dans la position couchée sur la tranche.
La figure 6 est une vue de côté schématique d'un navire comprenant un ensemble de propulsion vélique selon un mode de réalisation de l'invention, les embases de l'ensemble de propulsion vélique étant situées à des distances différentes du pont du navire dans la direction verticale.
La figure 7a est une vue en perspective schématique d'une embase d'un ensemble de propulsion vélique selon un mode de réalisation de l'invention.
La figure 7b est une vue en perspective schématique d'une embase d'un ensemble de propulsion vélique selon un mode de réalisation de l'invention.
La figure 8a est une vue en perspective schématique d'une voile rigide d'un ensemble de propulsion vélique selon un mode de réalisation de l'invention, la voile rigide étant formée de plusieurs sections de voile empilées selon l'axe de voile.
La figure 8b est une vue en perspective schématique d'une section de la voile rigide représentée sur la figure 8a.
La figure 9 est une vue en perspective schématique d'un mécanisme de rotation d'une barre de flèche selon un mode de réalisation de l'invention.

### DESCRIPTION DETAILLEE DE L'INVENTION

### Premier mode de réalisation

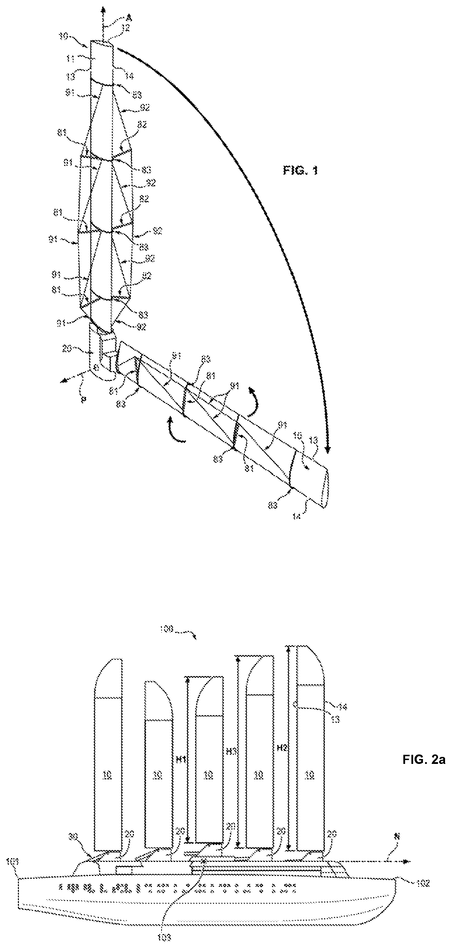

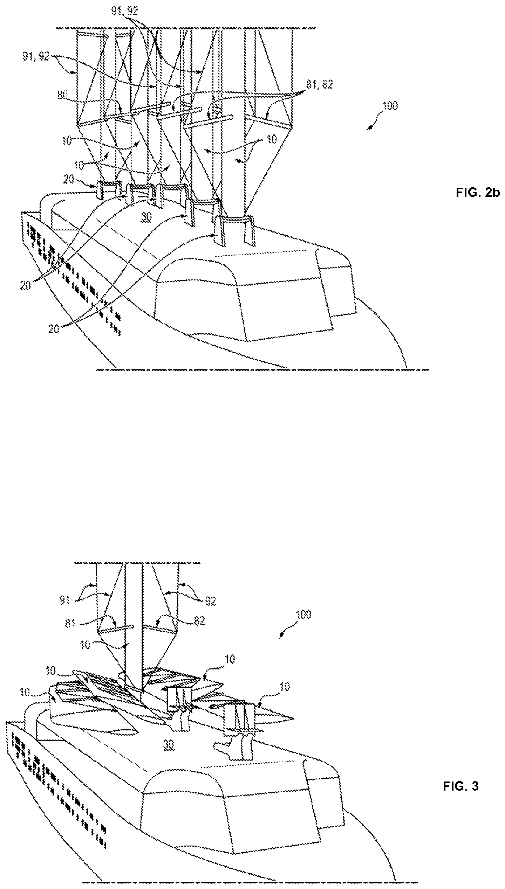

Dans un premier mode de réalisation, un ensemble de propulsion vélique pour un navire 100, illustré à titre d'exemple non limitatif en figures 2a à 6, comprend au moins deux voiles rigides 10 adaptées pour être disposées sur le navire 100 à distance l'une de l'autre le long d'un axe de navire N, chaque voile rigide 10 formant une aile à profil aérodynamique s'étendant principalement selon un axe de voile A.

Chaque voile rigide 10 est montée pivotante autour d'un axe de pivotement de couchage P, un changement de position de la voile rigide 10 entre une position hissée et une position couchée comprenant un pivotement de la voile rigide 10 autour de l'axe de pivotement de couchage P.

Dans la position hissée, l'axe de voile A est sensiblement perpendiculaire à un plan de navire formé par l'axe de pivotement de couchage P et l'axe de navire N. Dans la position couchée, l'axe de voile A est sensiblement parallèle au plan de navire, et forme un angle non nul par rapport à l'axe de navire N.

Chaque voile rigide 10 dans la position hissée est montée pivotante autour de l'axe de voile A de sorte à régler une incidence de la voile rigide 10 par rapport à l'axe de navire N. Chaque voile rigide 10 peut être montée de sorte à être également pivotante autour de l'axe de voile A lorsque la voile rigide 10 est dans la position couchée.

Le navire 100 s'étend principalement selon un axe longitudinal. L'axe de navire N peut correspondre sensiblement à l'axe longitudinal, ou peut présenter une orientation, par exemple de quelques degrés, par rapport à l'axe longitudinal. L'axe de navire N peut être sensiblement parallèle à ou confondu avec un axe moyen d'alignement des voiles rigides 10, en particulier avec un axe moyen d'alignement des pieds 15 des voiles rigides 10.

Le navire 100 comprend un pont 30 s'étendant principalement selon un axe de navire N. Au moins une partie du pont 30 est sensiblement plane et s'étend sensiblement dans un plan horizontal. Le plan horizontal est sensiblement parallèle au plan d'eau sur lequel évolue le navire 100 en l'absence de gîte et d'assiette du navire 100. Un axe vertical correspond à un axe perpendiculaire au pont 30 du navire 100. L'axe vertical peut être sensiblement perpendiculaire au plan de navire. La voile rigide 10 est située au-dessus du pont 30 du navire 100 dans une direction verticale correspondant à la direction de l'axe vertical. Le plan de navire peut être sensiblement parallèle au plan horizontal, le pont 30 du navire 100 étant sensiblement parallèle au plan de navire. Lorsque la voile rigide 10 est dans la position hissée, l'axe de voile A peut être sensiblement perpendiculaire au plan horizontal du pont 30 du navire 100, c'est-à-dire peut s'étendre sensiblement dans la direction verticale.

Dans la position couchée, l'axe de voile A forme un angle non nul par rapport à l'axe de navire N. En d'autres termes, dans la position couchée, l'axe de voile A est compris dans un plan parallèle au plan de navire, et est orienté avec une certaine inclinaison non nulle par rapport à l'axe de navire N. La voile rigide 10 est ainsi couchée en diagonale par rapport à l'axe de navire N, et non parallèlement ou perpendiculairement à l'axe de navire N.

Le pont 30 du navire 100 peut correspondre au pont continu le plus élevé du navire 100 lorsque le navire 100 comprend plusieurs ponts.

Lorsque la voile rigide 10 est dans la position couchée, la voile rigide 10 peut être située à distance du pont 30 dans la direction verticale, ou être au moins partiellement au contact du pont 30. Ainsi qu'il sera décrit ci-dessous, les voiles rigides 10 dans la position couchée peuvent être rangées en tuilage ou sur la tranche.

Au moins deux voiles rigides 10 de l'ensemble de propulsion vélique peuvent être agencées de sorte que dans la position couchée, les axes de voile A des au moins deux voiles rigides 10 sont parallèles entre eux et situés à distance l'un de l'autre le long de l'axe de navire N, de sorte que les au moins deux voiles rigides 10 de l'ensemble de propulsion vélique sont rangées en épi sur le navire 100 lorsqu'elles sont dans la position couchée.

Le rangement en épi des voiles rigides 10 couchées permet de diminuer l'encombrement et de minimiser le débord des voiles rigide 10 couchées sur le navire 100. Les voiles rigides 10 couchées sont décalées le long de l'axe de navire N et rangées en diagonale par rapport à l'axe de navire N, donc ne se touchent pas, ce qui facilite leur rangement.

L'angle formé entre l'axe de voile A et l'axe de navire N lorsque la voile rigide 10 est dans la position couchée peut être compris entre 5° et 45°, de préférence entre 5° et 20°, de préférence entre 5° et 15°, par exemple entre 10° et 15°. De telles valeurs d'angle permettent d'optimiser encore le rangement en épi des voiles rigides 10. L'angle formé entre l'axe de voile A et l'axe de navire N lorsque la voile rigide 10 est dans la position couchée peut correspondre à l'angle le plus faible en dessous duquel les voiles se percutent dans la position couchée en tuilage telle que décrite ci-dessous.

Le pivotement de la voile rigide 10 autour de l'axe de voile A lorsque la voile rigide 10 est dans la position hissée permet de régler une incidence de la voile rigide 10, et ainsi de modifier les propriétés de l'écoulement d'air le long des parois 11, 12 de la voile rigide 10 afin d'optimiser le rendement propulsif de l'ensemble de propulsion vélique. La voile rigide 10 peut être adaptée pour être pivotante autour de l'axe de voile A par un pivotement de +/- 45°, de +/-90°, de +/-180°, ou de toute autre valeur adaptée. Ainsi, une certaine gamme d'incidences, voire toutes les incidences lorsque le pivotement est de +/-180°, est accessible à la voile rigide 10.

Un changement de position de la voile rigide 10 entre la position hissée et la position couchée, par exemple depuis la position hissée vers la position couchée, ou à l'inverse depuis la position couchée vers la position hissée, comprend un pivotement de la voile rigide 10 autour de l'axe de pivotement de couchage P. La voile rigide 10 peut être déplacée entre la position hissée et la position couchée par pivotement de sensiblement 90° autour de l'axe de pivotement de couchage P.

Un changement de position de la voile rigide 10 entre la position hissée et la position couchée peut comprendre en outre un pivotement de la voile rigide 10 autour de l'axe de voile A, ce pivotement étant adapté pour modifier une incidence de la voile rigide 10. Le pivotement de la voile rigide 10 autour de l'axe de voile A peut avoir lieu avant ou après le pivotement de la voile rigide 10 autour de l'axe de pivotement de couchage P. Le pivotement de la voile rigide 10 autour de l'axe de voile A peut avoir lieu lorsque la voile rigide 10 est dans la position hissée ou dans la position couchée.

Un changement de position de la voile rigide 10 entre la position couchée et la position hissée comprend un pivotement de la voile rigide 10 autour de l'axe de pivotement de couchage P, qui peut correspondre au pivotement inverse du pivotement de la voile rigide 10 autour de l'axe de pivotement de couchage P pour passer de la position hissée à la position couchée. La voile rigide 10 peut être déplacée entre la position couchée et la position couchée par pivotement de sensiblement 90° autour de l'axe de pivotement de couchage P.

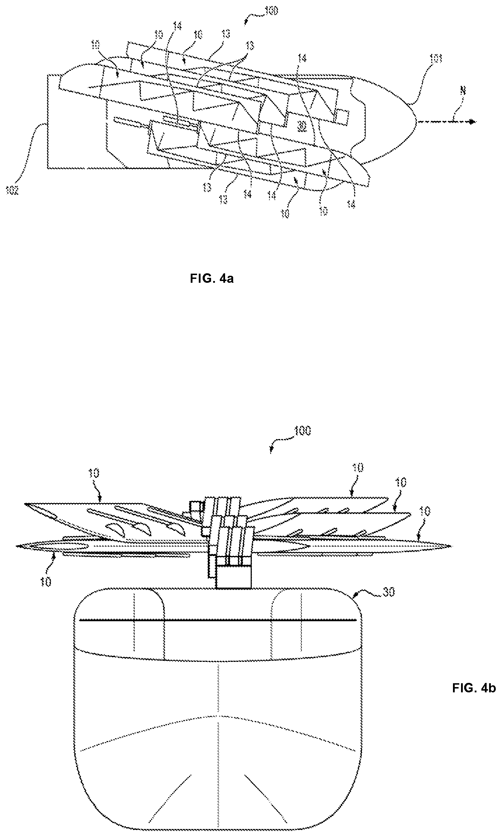

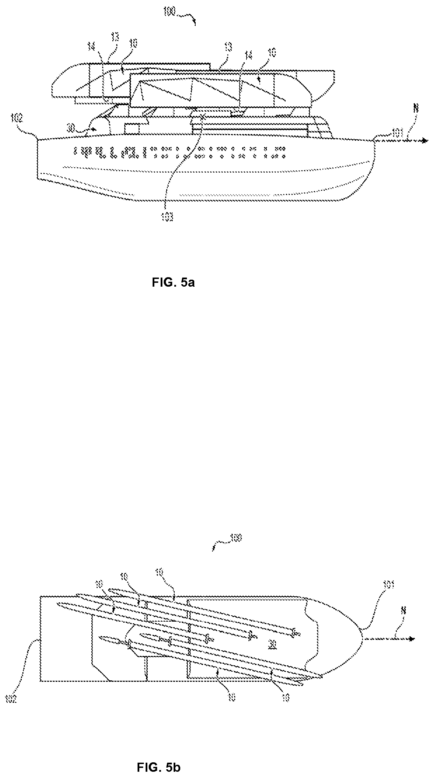

L'ensemble de propulsion vélique peut comprendre au moins deux premières voiles rigides 10 adaptées pour présenter chacune un axe de voile A qui, lorsque la voile rigide 10 est dans la position couchée, est sensiblement parallèle au plan de navire et forme un premier angle non nul par rapport à l'axe de navire N, les au moins deux premières voiles rigides 10 de l'ensemble de propulsion vélique étant couchées d'un premier côté par rapport à l'axe de navire N. L'ensemble de propulsion vélique comprend en outre au moins deux deuxièmes voiles rigides 10 adaptés pour présenter chacune un axe de voile A qui, lorsque la voile rigide 10 est dans la position couchée, est sensiblement parallèle au plan de navire et forme un deuxième angle non nul par rapport à l'axe de navire N, les au moins deux deuxièmes voiles rigides 10 de l'ensemble de propulsion vélique étant couchées d'un deuxième côté par rapport à l'axe de navire N, le deuxième côté étant opposé au premier côté par rapport à l'axe de navire N. Le premier angle et le deuxième angle peuvent correspondre à des angles alterne-interne de même mesure, la valeur absolue du premier angle et du deuxième angle étant identique. Une telle configuration est illustrée à titre d'exemples non limitatifs sur la figure 4a, la figure 4b, la figure 5a et la figure 5b. En variante, le premier angle et le deuxième angle peuvent être différents l'un de l'autre.

### Voile rigide

Chaque voile rigide 10 forme une aile à profil aérodynamique comprenant un bord d'attaque 13 et un bord de fuite 14, une première paroi 11 raccordant le bord d'attaque 13 et le bord de fuite 14 et une deuxième paroi 12 raccordant le bord d'attaque 13 et le bord de fuite 14. Une distance entre la première paroi 11 et la deuxième paroi 12 en un point donné de la voile rigide 10 correspond à une épaisseur de la voile rigide 10.

Une voile rigide 10, ou aile rigide, est classiquement utilisée sur des navires de sorte à améliorer l'efficacité aérodynamique. La forme de chacune des parois 11, 13 de la voile rigide 10 est fixe, en ce qu'elle n'est pas affectée par les conditions extérieures susceptibles d'être rencontrées pendant la navigation. L'épaisseur de la voile rigide 10 en un point donné de la voile rigide 10 est ainsi constante lors de la navigation.

Lorsque la voile rigide 10 est dans la position hissée, l'une parmi la première paroi 11 ou la deuxième paroi 12 forme une paroi intrados, et l'autre parmi la première paroi 11 ou la deuxième paroi 12 forme une paroi extrados. La paroi intrados est la face opposée à la portance. La paroi extrados est la face du côté de la portance.

Une corde de la voile rigide 10 correspond à une ligne reliant le bord d'attaque 13 et le bord de fuite 14 de la voile rigide 10 dans un plan normal à l'axe de voile A, ainsi qu'illustré à titre d'exemple non limitatif en figure 2a et en figure 5a.

Une hauteur H1, H2, H3 d'une voile rigide 10 correspond à une dimension le long de l'axe de voile A de la voile rigide 10.

La voile rigide 10 peut former un profil aérodynamique classique, par exemple de type profil NACA symétrique.

La voile rigide 10 peut comprendre un pied 15 correspondant à une extrémité de la voile rigide 10 adaptée pour être située le plus proche du pont 30 du navire 100, et un sommet opposé au pied 15 le long de l'axe de voile A.

La voile rigide 10 peut être réalisée par exemple en matériau composite ou en aluminium. La voile rigide 10 est ainsi réalisée en un matériau durable, et présente donc une durée de vie importante. L'aluminium est un matériau peu onéreux et recyclable, ce qui permet de réaliser une voile rigide 10 à moindre coûts. Lorsque la voile rigide 10 est réalisée en aluminium, un ensemble de propulsion vélique comprenant des barres de flèche et des haubans est particulièrement avantageux, notamment lorsque la voile rigide 10 présente des dimensions importantes.

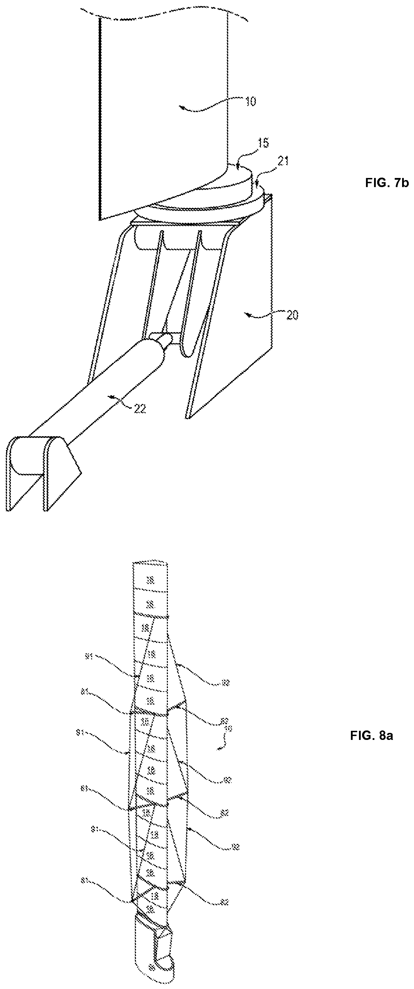

La voile rigide 10 peut être formée d'une pluralité de tronçons de voile 18 empilés le long de l'axe de voile A, ainsi qu'illustré à titre d'exemple non limitatif en figure 8a. Les tronçons de voile 18 peuvent être empilés depuis le pied 15 de la voile rigide 10 jusqu'au sommet de la voile rigide 10. Une hauteur H1, H2, H3 de la voile rigide 10 peut correspondre à une distance le long de l'axe de voile A d'un premier tronçon 18 formant le pied 15 de la voile rigide jusqu'à un dernier tronçon 18 formant le sommet de la voile rigide 10.

Une voile rigide 10 fabriquée par tronçons 18 permet de simplifier et de diminuer les coûts de fabrication du fait de l'effet de série. En outre, les tronçons 18 présentent des dimensions plus faibles que les dimensions de la voile rigide 10 entière, ce qui permet leur transport par camion. Enfin, les tronçons de voile 18 peuvent être assemblés directement sur le navire 100 par le chantier naval pour former la voile rigide 10, ce qui permet d'éviter d'avoir recours à un moyen de levage de la voile rigide 10 pour l'installer à bord.

Chaque tronçon de voile 18 de la voile rigide 10 peut s'étendre sur au moins 1% et au plus 50% de la hauteur H1, H2, H3 de la voile rigide 10, le nombre de tronçons 18 étant ainsi compris entre 2 et 100. Par exemple, chaque tronçon de voile 18 de la voile rigide 10 peut s'étendre sur au moins 2% et au plus 20% de la hauteur H1, H2, H3 de la voile rigide 10.

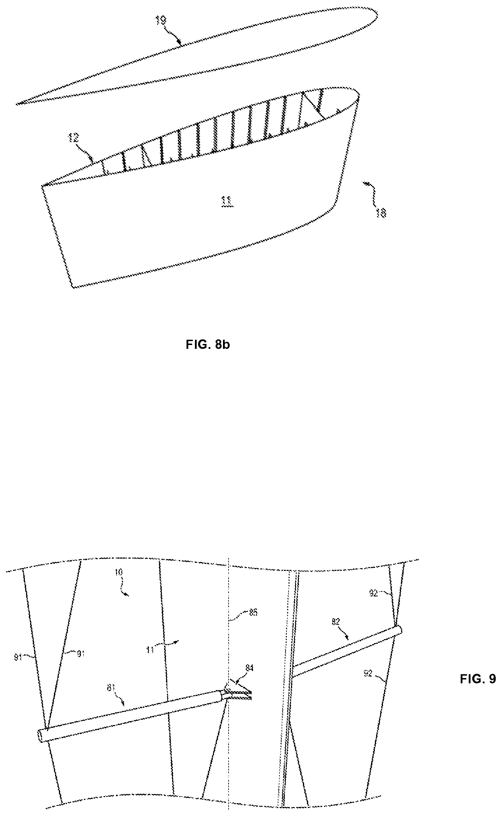

Chaque tronçon 18 peut être composé de tôle et d'une structure interne, ainsi qu'illustré à titre d'exemple non limitatif en figure 8b. Chaque tronçon 18 peut s'empiler avec un tronçon adjacent 18 en étant soudé ou boulonné au tronçon adjacent 18.

Tous les tronçons 18 d'une même voile rigide 10 peuvent être de formes et de dimensions identiques, ce qui permet de simplifier encore la fabrication de la voile rigide 10.

Un couple structurel 19 peut être disposé entre deux tronçons 18 de la voile rigide 10, afin de procurer un assemblage solide des tronçons 18 entre eux.

Le tronçon 18 formant le sommet de la voile rigide 10 peut comprendre un carénage disposé sur le sommet du tronçon 18 afin de fermer un contour du tronçon 18. Un tel carénage permet d'améliorer l'esthétique de la voile rigide 10 et d'améliorer l'efficacité aérodynamique de l'écoulement aérodynamique au niveau du sommet de la voile rigide 10.

Optionnellement, une partie proche du bord de fuite d'un tronçon 18 peut pivoter autour d'un axe sensiblement parallèle à l'axe de voile A, de sorte à former un volet, ce qui permet d'augmenter le coefficient de portance de la voile rigide 10.

L'ensemble de propulsion vélique peut comprendre au moins un panneau photovoltaïque adapté pour être monté sur au moins une paroi 11, 12 de la voile rigide 10. Le panneau photovoltaïque peut être dimensionné de manière à recouvrir une partie seulement de la paroi 11, 12 de la voile rigide 10, ou sensiblement toute la paroi 11, 12 de la voile rigide 10. Ainsi, la voile rigide 10 permet, en plus de la fonction de propulsion du navire 100, de produire de l'énergie pour les besoins du navire 100 ou des personnes à bord du navire 100.

### Embase

Chaque voile rigide 10 peut être montée sur une embase 20 respective. Ainsi, un ensemble de propulsion vélique comprenant au moins deux voiles rigides 10 comprend au moins deux embases 20. Le pied 15 de la voile rigide 10 peut être adapté pour être encastré dans l'embase 20, en particulier dans l'élément rotatif 21 de l'embase 20.

Chaque embase 20 comprend un élément rotatif 21 monté pivotant autour de l'axe de voile A de sorte qu'un pivotement de l'élément rotatif 21 règle une incidence de la voile rigide 10 lorsque la voile rigide 10 est dans la position hissée.

Chaque voile rigide 10 est montée sur l'embase 20 respective de manière solidaire de l'embase 20 en rotation autour de l'axe de voile A lorsque la voile rigide 10 est dans la position hissée.

Chaque voile rigide 10 est montée sur l'embase 20 respective de manière pivotante par rapport à l'embase 20 autour de l'axe de pivotement de couchage P. En particulier, le pied 15 de la voile rigide 10 peut être monté au niveau d'une liaison pivot de l'embase 20, la liaison pivot étant orientée suivant l'axe de pivotement de couchage P.

En outre, chaque voile rigide 10 peut être montée sur l'embase 20 respective de manière solidaire de l'embase 20 en rotation autour de l'axe de voile A lorsque la voile rigide 10 est dans la position couchée.

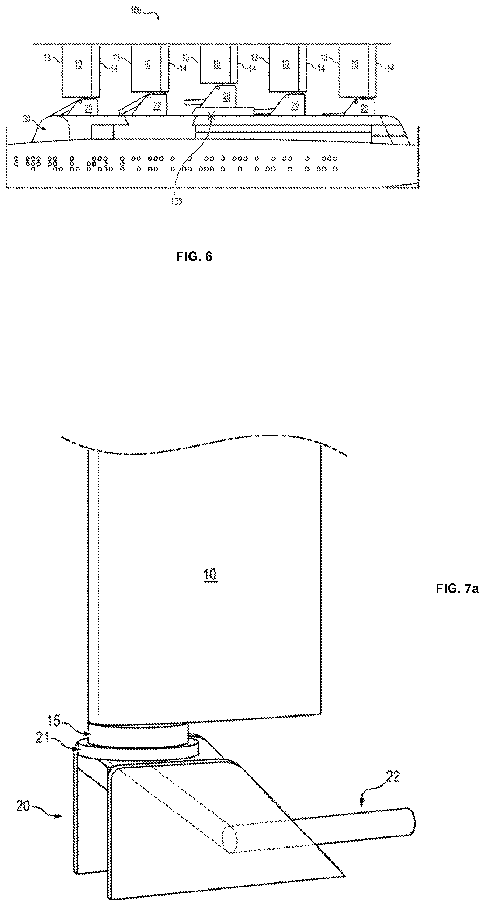

L'élément rotatif 21 peut être une couronne rotative, ainsi qu'illustré à titre d'exemple non limitatif en figure 7a et en figure 7b, ou en variante peut être un axe sur paliers. L'élément rotatif 21 est fixé sur l'embase 20.

L'embase 20 peut comprendre au moins un système mécanique de pivotement 22, tel qu'un vérin hydraulique, une couronne rotative, ou un ensemble pignon-crémaillère, adapté pour faire pivoter la voile rigide 10 autour de l'axe de pivotement de couchage P entre la position couchée sur le pont 30 pour le rangement, et la position hissée pour la navigation.

Par exemple, la figure 7a et la figure 7b illustrent un système mécanique de pivotement 22 comprenant un vérin hydraulique adapté pour être monté sur le navire 100 en une première extrémité, et pour être monté sur le pied 15 de la voile via l'élément rotatif 21 en une deuxième extrémité opposée à la première extrémité.

Ainsi, le système de pivotement de la voile rigide 10 entre la position hissée et la position couchée et le système de réglage de l'incidence de la voile rigide 10 sont simples et nécessitent peu de pièces. Le système de pivotement et de réglage de l'incidence est en outre fiable et permet une maintenance facile. En effet, l'embase 20 comprenant l'élément rotatif 21 et le système mécanique de pivotement 22 est située au niveau du pied 15 de la voile rigide 10, et est donc facilement accessible.

L'élément rotatif 21 peut être situé entre un cinquième et un quart de la corde de la voile rigide 10 en arrière du bord d'attaque 13, de manière à orienter naturellement la voile rigide 10 dans la direction du vent. En effet, la résultante aérodynamique passe alors derrière l'axe de voile A autour duquel la voile rigide 10 pivote pour régler son incidence.

Chaque embase 20 peut comprendre des moyens de blocage angulaire de l'élément rotatif 21 adaptés pour bloquer une rotation de l'élément rotatif 21 autour de l'axe de voile A lorsque l'élément rotatif 21 est dans une position angulaire prédéterminée, par exemple dans une position prédéterminée correspondant à l'angle non nul formé entre l'axe de voile A et l'axe de navire N dans la position couchée.

Par exemple, la voile rigide 10 peut être couchée, puis la position angulaire de l'élément rotatif 21 peut être réglée lorsque la voile rigide 10 est dans la position couchée jusqu'à atteindre l'incidence désirée pour le rangement en épi. Alors, la position angulaire de l'élément rotatif 21 est bloquée de sorte que l'incidence de la voile rigide 10 est fixée. Le rangement en épi des voiles rigides 10 de l'ensemble de propulsion vélique est ainsi facilité. En variante, la position angulaire de l'élément rotatif 21, donc l'incidence de la voile rigide 10, peut être réglée lorsque la voile rigide 10 est dans la position hissée en vue du rangement de la voile rigide 10 jusqu'à atteindre l'incidence désirée pour le rangement en épi. Alors, la position angulaire de l'élément rotatif 21 est bloquée de sorte que l'incidence de la voile rigide 10 est fixée. La voile rigide 10 peut ainsi être couchée selon cette incidence précise.

Chaque embase 20 peut être conçue pour bloquer une rotation de l'élément rotatif 21 autour de l'axe de voile A lorsque la voile rigide 10 est dans la position couchée. Ainsi, l'orientation de la voile rigide 10 est fixée lorsque la voile rigide 10 est dans la position couchée, la voile rigide 10 ne risquant pas de tourner autour de l'axe de voile A lorsqu'elle est rangée.

### Position couchée sur la tranche et position couchée en tuilage

La position couchée peut comprendre une position couchée sur la tranche et une position couchée en tuilage. Ainsi, chaque voile rigide 10 peut être montée mobile entre :
- la position hissée,
- une position couchée sur la tranche, dans laquelle l'axe de voile A est sensiblement parallèle au plan de navire et une corde de la voile rigide 10 est sensiblement perpendiculaire au plan de navire, et
- une position couchée en tuilage, dans laquelle l'axe de voile A est sensiblement parallèle au plan de navire et une corde de la voile rigide 10 est inclinée d'un angle inférieur à 50° par rapport au plan de navire, par exemple est sensiblement parallèle au plan de navire.

En d'autres termes, l'ensemble de propulsion vélique pour un navire 100 comprend au moins deux voiles rigides 10 adaptées pour être disposées sur le navire 100 à distance l'une de l'autre le long d'un axe de navire N, chaque voile rigide 10 s'étendant principalement selon un axe de voile A, chaque voile rigide 10 formant une aile à profil aérodynamique comprenant un bord d'attaque 13 et un bord de fuite 14, une corde de la voile rigide 10 correspondant à une ligne reliant le bord d'attaque 13 et le bord de fuite 14 de la voile rigide 10 dans un plan normal à l'axe de voile A, dans lequel chaque voile rigide 10 est montée mobile entre une position hissée, une position couchée sur la tranche, et une position couchée en tuilage, dans lequel chaque voile rigide 10 est montée pivotante autour d'un axe de pivotement de couchage P, un changement de position de la voile rigide 10 entre la position hissée et la position couchée sur la tranche ou entre la position hissée et la position couchée en tuilage comprenant un pivotement de la voile rigide 10 autour de l'axe de pivotement de couchage P, et dans lequel :
- dans la position hissée, l'axe de voile A est sensiblement perpendiculaire à un plan de navire formé par l'axe de pivotement de couchage P et l'axe de navire N, et la voile rigide 10 est montée pivotante autour de l'axe de voile A de sorte à régler une incidence de la voile rigide 10 par rapport à l'axe de navire N ;
- dans la position couchée sur la tranche, l'axe de voile A est sensiblement parallèle au plan de navire et forme un angle non nul par rapport à l'axe de navire N, et la corde de la voile rigide 10 est sensiblement perpendiculaire au plan de navire N ; et
- dans la position couchée en tuilage, l'axe de voile A est sensiblement parallèle au plan de navire et forme un angle non nul par rapport à l'axe de navire N, et la corde de la voile rigide 10 est inclinée d'un angle inférieur à 50° par rapport au plan de navire 100, par exemple est sensiblement parallèle au plan de navire 100.

La position couchée sur la tranche de la voile rigide 10 couchée permet de minimiser le débord des voiles rigides 10 dans la position couchée, et ainsi de ne pas augmenter la largeur du navire 100 lorsque les voiles rigides 10 sont couchées. Cette position couchée sur la tranche est donc particulièrement utile lorsque le navire 100 est au port, l'encombrement latéral du navire 100 étant alors optimisé pour minimiser les problèmes d'accessibilité au quai. Une corde de la voile rigide 10 dans la position couchée sur la tranche peut s'étendre sensiblement dans la direction verticale.

La position couchée en tuilage de la voile rigide 10 permet de diminuer la distance de la voile rigide 10 couchée au pont 30 du navire 100, donc de pouvoir augmenter la hauteur H1, H2, H3 de la voile rigide 10, sans gêner le pivotement d'une autre voile rigide 10 qui serait en position hissée, et ainsi d'augmenter le rendement propulsif de l'ensemble de propulsion vélique. En d'autres termes, la position couchée en tuilage permet d'augmenter la surface de voilure de chaque voile rigide 10 de l'ensemble de propulsion vélique, en diminuant la dimension de l'embase 20 dans la direction verticale.

En effet, notamment en mer pendant la navigation, certaines voiles rigides 10 de l'ensemble de propulsion vélique peuvent être dans la position hissée tandis que d'autres sont dans la position couchée, en fonction des conditions météorologiques, de la vitesse souhaitée, etc. Le pied 15 de la voile rigide 10, qui est entraîné en rotation par l'élément rotatif 21 de l'embase 20, doit être situé au-dessus, dans la direction verticale, d'une voile rigide 10 dans la position couchée, de sorte à permettre à une voile rigide 10 dans la position hissée de tourner autour de l'axe de voile A pour en modifier l'incidence, sans être gênée par la voile rigide 10 couchée.

Ainsi, l'une des voiles rigides 10 de l'ensemble de propulsion vélique peut être en position couchée en tuilage tandis qu'une autre des voiles rigides 10 de l'ensemble de propulsion vélique est en position hissée et peut pivoter autour de l'axe de voile A, car son pied 15 est situé au-dessus, dans la direction verticale, de l'embase 20 de la voile rigide 10 qui est couchée en tuilage. En effet, la voile rigide 10 couchée sur la tranche présente une dimension dans la direction verticale correspondant sensiblement à la dimension de la corde de la voile rigide 10, et qui est donc largement supérieure à la dimension dans la direction verticale de la voile rigide 10 dans la position couchée en tuilage, correspondant sensiblement à l'épaisseur de la voile rigide 10. En outre, la position couchée en tuilage permet de minimiser la prise au vent et de maximiser la surface horizontale couverte par la voile rigide 10 couchée, ce qui peut permettre par exemple de constituer un abri contre les conditions extérieures (pluie, soleil, etc.), de maximiser l'efficacité de panneaux solaires sur les voiles rigides 10, etc. La voile rigide 10 dans la position couchée en tuilage peut s'étendre sensiblement dans un plan parallèle au plan horizontal du pont 30 du navire 100, situé à une certaine distance dans la direction verticale, nulle ou strictement positive, du plan horizontal, la voile rigide 10 étant respectivement posée sur le pont 30 ou tuilée à distance du pont 30 et parallèlement au pont 30.

Pouvoir choisir entre la position couchée sur la tranche et la position couchée en tuilage permet d'adapter et d'optimiser la position couchée de la voile rigide 10 en fonction des conditions extérieures et du rangement souhaité. En particulier, l'encombrement latéral du navire 100 au port peut être minimisé grâce à la position couchée en tuilage, et la hauteur H1, H2, H3 des voiles rigides 10, donc le rendement propulsif de l'ensemble de propulsion vélique, peut être optimisée pour la navigation grâce à la position couchée en tuilage.

Au moins deux voiles rigides 10 de l'ensemble peuvent être agencées de sorte que dans la position couchée, les au moins deux voiles rigides 10 se chevauchent au moins partiellement. Lorsque plusieurs voiles rigides 10 de l'ensemble de propulsion vélique sont dans la position couchée en tuilage, lesdites plusieurs voiles rigides 10 de l'ensemble se chevauchent ainsi au moins partiellement, ce qui permet de minimiser encore davantage l'encombrement des voiles rigides 10 couchées.

Au moins deux des embases 20 peuvent être situées à distance l'une de l'autre le long d'un axe sensiblement perpendiculaire au plan de navire, plus précisément le long de l'axe vertical. Ainsi, l'ensemble de propulsion vélique comprend des embases 20 situées à des distances différentes par rapport au pont 30 du navire 100 dans la direction verticale. Une telle configuration permet de réduire l'inclinaison des voiles rigides 10 couchées en tuilage par rapport au pont 30 du navire 100, par exemple de rendre nulle l'inclinaison des voiles rigides 10 couchées en tuilage par rapport au pont 30 du navire 100. Ainsi, les voiles rigides 10 sont sensiblement parallèles au pont 30 du navire 100 dans la position couchée en tuilage.

En particulier, une première embase 20 qui est située plus loin d'un centre 103 du navire 100 qu'une deuxième embase 20, peut être située plus proche du pont 30 du navire 100 dans la direction verticale que la deuxième embase 20. Ainsi, les voiles rigides 10 situées plus loin du centre 103 du navire 100 sont couchées en tuilage en-dessous des voiles rigides 10 situées plus proche du centre 103 du navire 100, ce qui permet d'optimiser encore le rangement des voiles rigides 10 dans la position couchée en tuilage.

Lorsque la voile rigide 10 couchée en tuilage présente une inclinaison non nulle par rapport au plan de navire, la voile rigide 10 peut notamment être inclinée vers l'extérieur du navire 100, le bord d'attaque 13 de la voile rigide 10 étant disposé plus proche du pont 30 du navire 100 que le bord de fuite 14 de la voile rigide 10 dans la direction verticale.

Une première voile rigide 10 de l'ensemble de propulsion vélique dans la position couchée en tuilage peut être sensiblement parallèle au pont 30 du navire 100, avec une inclinaison inférieure à 10°, de préférence une inclinaison nulle, par rapport au plan de navire. Une deuxième voile rigide 10 de l'ensemble de propulsion vélique dans la position couchée en tuilage peut être située au-dessus de la première voile rigide 10 dans la position couchée et présenter une inclinaison par rapport au pont 30 du navire 100 strictement supérieure à une inclinaison de la première voile rigide 10 par rapport au pont 30 du navire 100.

Pour coucher une voile rigide 10 sur la tranche, la voile rigide 10 dans la position hissée peut être d'abord pivotée autour de l'axe de voile A jusqu'à une valeur d'incidence correspondant sensiblement à la valeur d'angle non nul formé entre l'axe de voile A et l'axe de navire N dans la position couchée. Puis, la voile rigide 10 est pivotée autour de l'axe de pivotement de couchage P, jusqu'à atteindre la position couchée sur la tranche.

Pour coucher une voile rigide 10 en tuilage, la voile rigide 10 dans la position hissée peut être d'abord pivotée autour de l'axe de voile A jusqu'à une valeur d'incidence correspondant sensiblement la valeur d'angle non nul formé entre l'axe de voile A et l'axe de navire N dans la position couchée à laquelle est ajoutée ou soustraite une valeur de sensiblement 90°. Puis, la voile rigide 10 est pivotée autour de l'axe de pivotement de couchage P, jusqu'à atteindre la position couchée en tuilage. En variante, la voile rigide 10 peut d'abord être couchée sur la tranche, puis être pivotée de sensiblement 90° autour de l'axe de voile A pour atteindre la position couchée en tuilage.

### Barres de flèche et haubans

L'ensemble de propulsion vélique peut comprendre en outre, pour une ou plusieurs ou toutes les voiles rigides 10 de l'ensemble de propulsion vélique :
- au moins une barre de flèche 81, 82 adaptée pour être montée pivotante par rapport à la paroi 11, 12 de la voile rigide 10, entre une position de navigation dans laquelle la barre de flèche 81, 82 s'étend sensiblement perpendiculairement à la paroi 11, 12 de la voile rigide 10, et une position de rangement dans laquelle la barre de flèche 81, 82 s'étend sensiblement contre la paroi 11, 12 de la voile rigide 10, et
- au moins deux haubans 91, 92 montés sur la barre de flèche 81, 82, dans lequel lorsque la barre de flèche 81, 82 est dans la position de navigation, les haubans 91, 92 s'étendent sensiblement à distance de la paroi 11, 12 de la voile rigide 10, et lorsque la barre de flèche 81, 82 est dans la position de rangement, les haubans 91, 92 s'étendent sensiblement contre la paroi 11, 12 de la voile rigide 10.

Cette configuration sera décrite plus en détails ci-dessous en relation avec le quatrième mode de réalisation, qui est compatible du premier mode de réalisation. En particulier, chaque caractéristique décrite ci-dessous en relation avec le quatrième mode de réalisation est compatible avec chaque caractéristique décrite en relation avec le premier mode de réalisation.

### Exemple d'ensemble de propulsion vélique

Un ensemble de propulsion vélique, illustré à titre d'exemple non limitatif en figures 2a à 6, comprend cinq voiles rigides 10 telles que décrites ci-dessus. Chaque voile rigide 10 est encastrée sur une embase 20 respective, les voiles rigides 10 étant adaptées pour être disposées sur le navire 100 à distance l'une de l'autre le long de l'axe de navire N.

Trois des voiles rigides 10 de l'ensemble sont adaptées pour présenter un axe de voile A qui, lorsque la voile rigide 10 est dans la position couchée, est sensiblement parallèle au plan de navire, forme un premier angle non nul par rapport à l'axe de navire N, qui peut être sensiblement parallèle à ou confondu avec l'axe moyen d'alignement des voiles rigides 10, et s'étend d'un premier côté par rapport à l'axe de navire N. Deux des voiles rigides 10 de l'ensemble sont adaptés pour présenter un axe de voile A qui, lorsque la voile rigide 10 est dans la position couchée, est sensiblement parallèle au plan de navire, forme un deuxième angle non nul par rapport à l'axe de navire N, et s'étend d'un deuxième côté par rapport à l'axe de navire N. Le premier angle et le deuxième angle correspondent à des angles alterne-interne de même mesure, la valeur absolue du premier angle et du deuxième angle étant identique. Le deuxième côté est opposé au premier côté par rapport à l'axe de navire N.

Chaque voile rigide 10 de l'ensemble peut être pivotée dans une position couchée correspondant à une position couchée en tuilage, ou dans une position couchée correspondant à une position couchée sur la tranche.

### Navire

Un navire 100, illustré à titre d'exemple non limitatif en figures 2a à 6, comprend :
- un pont 30 s'étendant principalement selon l'axe de navire N, et
- un ensemble de propulsion vélique selon l'un quelconque des exemples de réalisation décrits ci-dessus en relation avec le premier mode de réalisation.

Chaque voile rigide 10 de l'ensemble de propulsion vélique est adaptée pour être montée sur le pont 30 du navire 100, par exemple par le biais de l'embase 20.

Le pont 30 du navire 100 est sensiblement parallèle au plan de navire, le pont 30 du navire 100 et le plan de navire étant sensiblement horizontaux.

Le navire 100 peut s'étendre entre une extrémité avant 101 et une extrémité arrière 102. Un centre 103 du navire 100 correspond à un point du navire 100 sensiblement équidistant de l'extrémité avant 101 et de l'extrémité arrière 102 du navire 100. L'extrémité avant 101 correspond à la proue du navire 100, et l'extrémité arrière 102 correspond à la poupe du navire 100.

### Navire comprenant plusieurs voiles rigides de hauteurs différentes

Une première voile rigide 10 de l'ensemble de propulsion vélique présente une première hauteur H1 et une deuxième voile rigide 10 de l'ensemble de propulsion vélique présente une deuxième hauteur H2. La deuxième hauteur H2 est strictement supérieure à la première hauteur H1, et la première voile rigide 10 est disposée plus proche du centre 103 du navire 100 que la deuxième voile rigide 10. En d'autres termes, la deuxième voile rigide 10 est plus proche de l'une des extrémités avant 101 ou arrière 102 du navire 100 que la première voile rigide 10. Une plus grande hauteur H1, H2, H3 de voile rigide 10 est associée à une plus grande surface de voilure de la voile rigide 10, donc à des plus grandes dimensions de la voile rigide 10.

Ainsi, l'ensemble de propulsion vélique comprend plusieurs voiles rigides 10 de dimensions différentes, les voiles rigides 10 de plus petites dimensions étant agencées au centre 103 du navire 100 et les voiles rigides 10 de plus grandes dimensions étant agencées aux extrémités 101, 102 du navire 100.

Cet agencement permet de minimiser l'encombrement de l'ensemble de propulsion vélique sans diminuer la hauteur H1, H2, H3 des voiles rigides 10 lorsque les voiles rigides 10 sont dans la position couchée. Cet agencement permet donc d'augmenter la hauteur H1, H2, H3 des voiles rigides 10 disposées à proximité des extrémités avant 101 et arrière 102 du navire 100, donc d'augmenter la surface de voilure totale de l'ensemble de propulsion vélique, sans augmenter la longueur totale du navire 100. En effet, une voile rigide 10 disposée au niveau du centre 103 du navire 100 peut présenter une hauteur H1, H2, H3 correspondant sensiblement à une demi-longueur du navire 100, c'est-à-dire à une moitié d'une dimension selon l'axe de navire N entre l'extrémité avant 101 et l'extrémité arrière 102 du navire 100, tandis qu'une voile rigide 10 disposée au niveau d'une extrémité avant 101 ou arrière 102 du navire 100 peut présenter une hauteur H1, H2, H3 correspondant sensiblement à une longueur du navire 100, c'est-à-dire à une dimension selon l'axe de navire N entre l'extrémité avant 101 et l'extrémité arrière 102 du navire 100. Les voiles rigides 10 peuvent ainsi être pivotées dans la position couchée sans augmenter la longueur du navire 100.

En outre, cette configuration d'ensemble de propulsion vélique comprenant des voiles rigides 10 de différentes hauteurs H permet de régler la surface de voilure en fonction de la vitesse du vent et de l'état de mer, afin de garder une force propulsive constante, avec un centre longitudinal de voilure qui reste proche du centre 103 du navire 100. Les voiles rigides 10 de plus petites hauteurs H peuvent être dimensionnées structurellement pour résister à des vitesses de vent et des états de mer plus importants.

Par exemple, la deuxième hauteur H2 de la deuxième voile rigide 10 peut être de 5% à 50% supérieure à la première hauteur H1 de la première voile rigide 10, de préférence peut être de 10% à 20% supérieure à la première hauteur H1 de la première voile rigide 10.

L'ensemble de propulsion vélique peut comprendre une troisième voile rigide 10 adaptée pour être disposée entre la première voile rigide 10 et la deuxième voile rigide 10. La troisième voile rigide 10 présente une troisième hauteur H3, qui peut être égale à la première hauteur H1 ou à la deuxième hauteur H2, ou qui peut être strictement supérieure à la première hauteur H1 et strictement inférieure à la deuxième hauteur H2.

L'ensemble de propulsion vélique peut comprendre un nombre supérieur de voiles rigides 10. La hauteur de chaque voile rigide 10 peut être conditionnée par la distance entre la voile rigide 10 et le centre 103 du navire 100, une voile rigide 10 de l'ensemble de propulsion vélique disposée plus proche du centre 103 du navire 100 qu'une autre présentant une hauteur H1, H2, H3 moindre que l'autre. Ainsi, les voiles rigides 10 sont agencées progressivement selon leur hauteur de sorte que plus la hauteur H1, H2, H3 d'une voile rigide 10 est élevée, plus la voile rigide 10 est proche de l'une des extrémités, avant 101 ou arrière 102, du navire 100. Plus la hauteur H1, H2, H3 d'une voile rigide 10 est faible, plus la voile rigide 10 est proche du centre 103 du navire 100. Le navire 100 illustré à titre d'exemple non limitatif en figure 2a comprend un ensemble de propulsion vélique comprenant cinq voiles rigides 10 présentant chacune des hauteurs H différentes en fonction de la distance entre la voile rigide 10 et le centre 103 du navire 100.

Combiner des voiles rigides 10 présentant un axe de voile A qui, lorsque la voile rigide 10 est dans la position couchée, est sensiblement parallèle au plan de navire, et forme un angle non nul par rapport à l'axe de navire N, qui peut être sensiblement parallèle à ou confondu avec l'axe moyen d'alignement des voiles rigides 10, avec des voiles rigides 10 de hauteurs qui augmentent en s'éloignant du centre 103 du navire 100, permet d'augmenter encore davantage la hauteur H1, H2, H3 des voiles rigides 10, donc la surface de voilure de l'ensemble de propulsion vélique, sans augmenter l'encombrement latéral du navire 100. En effet, les voiles rigides 10 étant couchées en épi, les voiles rigides 10 situées à proximité des extrémités 101, 102 du navire 100 peuvent présenter des hauteurs H encore augmentées, du fait qu'elles sont couchées en diagonale du navire 100 sur toute leur hauteur H. Cet agencement permet donc de minimiser le débord des voiles rigides 10 couchées sur le pont 30 du navire 100, tout en en assurant que les voiles rigides 10 sont couchées sans devoir se chevaucher.

### Deuxième mode de réalisation

Dans un deuxième mode de réalisation, un navire 100 comprend :
- un pont 30 s'étendant principalement selon un axe de navire N dans un plan horizontal, et
- une voile rigide 10 adaptée pour être montée sur le pont 30 du navire 100, ladite voile rigide 10 formant une aile à profil aérodynamique s'étendant principalement selon un axe de voile A et comprenant un bord d'attaque 13 et un bord de fuite 14, une corde de la voile rigide 10 correspondant à une ligne reliant le bord d'attaque 13 et le bord de fuite 14 de la voile rigide 10 dans un plan normal à l'axe de voile A,
dans lequel la voile rigide 10 est montée mobile entre :
- une position hissée, dans laquelle l'axe de voile A est sensiblement perpendiculaire au plan horizontal,
- une position couchée sur la tranche, dans laquelle l'axe de voile A est sensiblement parallèle au plan horizontal et une corde de la voile rigide 10 est sensiblement perpendiculaire au plan horizontal, et
- une position couchée en tuilage, dans laquelle l'axe de voile A est sensiblement parallèle au plan horizontal et une corde de la voile rigide 10 est inclinée d'un angle inférieur à 50° par rapport au plan horizontal, par exemple est sensiblement parallèle au plan horizontal.

Les avantages associés à ce deuxième mode de réalisation correspondent aux avantages décrits ci-dessus concernant le rangement en tuilage ou sur la tranche des voiles rigides 10 de l'ensemble de propulsion vélique selon le premier mode de réalisation. En particulier, la position couchée sur la tranche de la voile rigide 10 couchée permet de minimiser le débord des voiles rigides 10 dans la position couchée, et ainsi de ne pas augmenter la largeur du navire 100 lorsque les voiles rigides 10 sont couchées, notamment au port. La position couchée en tuilage de la voile rigide 10 permet de diminuer la distance de la voile couchée au pont 30 du navire 100, donc de pouvoir augmenter la hauteur H1, H2, H3 de la voile rigide 10, donc la surface de voilure de l'ensemble de propulsion vélique, sans gêner le pivotement d'une autre voile rigide 10 qui serait en position hissée, et ainsi d'augmenter le rendement propulsif de l'ensemble de propulsion vélique. Pouvoir choisir entre la position couchée sur la tranche et la position couchée en tuilage permet d'adapter et d'optimiser le rangement de la voile rigide 10, notamment pour minimiser l'encombrement latéral du navire 100 au port grâce à la position couchée sur la tranche, ou pour optimiser le rendement propulsif de l'ensemble de propulsion vélique pour la navigation grâce à la position couchée en tuilage.

Les positions couchée sur la tranche et couchée en tuilage peuvent correspondre respectivement aux positions couchée sur la tranche et couchée en tuilage décrites ci-dessus concernant le premier mode de réalisation.

Le deuxième mode de réalisation peut être implémenté indépendamment du premier mode de réalisation, ou en combinaison avec le premier mode de réalisation, le deuxième mode de réalisation étant compatible avec chacune des caractéristiques décrites ci-dessus concernant le premier mode de réalisation. Le navire 100 selon le deuxième mode de réalisation peut ainsi comprendre un, plusieurs, ou la totalité des éléments décrits ci-dessus concernant le premier mode de réalisation, par exemple peut comprendre plusieurs voiles rigides 10 et/ou embases 20 telles que décrites ci-dessus, par exemple rangées en épi, le cas échéant avec élément rotatif 21 et système mécanique de pivotement 22 tels que décrits ci-dessus, une ou plusieurs barres de flèches et haubans tels que décrits ci-dessous, etc. Le deuxième mode de réalisation est en particulier compatible du rangement en épi décrit ci-dessus concernant le premier mode de réalisation. Ainsi, dans la position couchée sur la tranche et/ou dans la position couchée en tuilage, l'axe de voile A peut être sensiblement parallèle au plan de navire, et former un angle non nul par rapport à l'axe de navire N, qui peut être sensiblement parallèle à ou confondu avec l'axe moyen d'alignement des voiles rigides 10, de sorte que plusieurs voiles rigides 10 de l'ensemble de propulsion vélique sont rangées en épi. En outre, le deuxième mode de réalisation est compatible des voiles rigides 10 de hauteurs H différentes telles que décrites ci-dessus, les voiles rigides 10 de plus petites dimensions étant agencées plus proches du centre 103 du navire 100.

### Troisième mode de réalisation

Dans un troisième mode de réalisation, un navire 100 s'étend entre une extrémité avant 101 et une extrémité arrière 102, un centre 103 du navire 100 correspondant à un point du navire 100 sensiblement équidistant de l'extrémité avant 101 et de l'extrémité arrière 102 du navire 100, le navire 100 comprenant :
- un pont 30 s'étendant principalement selon l'axe de navire N, et
- au moins deux voiles rigides 10 adaptées pour être disposées sur le pont 30 du navire 100 à distance l'une de l'autre le long de l'axe de navire N, dans lequel chaque voile rigide 10 forme une aile à profil aérodynamique s'étendant principalement selon un axe de voile A, une hauteur H1, H2, H3 d'une voile rigide 10 correspondant à une dimension le long de l'axe de voile A de la voile rigide 10, dans lequel une première voile rigide 10 présente une première hauteur H1 et une deuxième voile rigide 10 présente une deuxième hauteur H2 strictement supérieure à la première hauteur H1, et dans lequel la première voile rigide 10 est disposée plus proche du centre 103 du navire 100 que la deuxième voile rigide 10.

Les avantages associés à ce troisième mode de réalisation correspondent aux avantages décrits ci-dessus concernant l'agencement de plusieurs voiles rigides 10 de hauteurs H différentes dans le navire 100 selon le premier mode de réalisation. L'agencement selon le troisième mode de réalisation permet ainsi d'augmenter la hauteur H1, H2, H3 des voiles rigides 10 disposées à proximité des extrémités avant 101 et arrière 102 du navire 100, donc d'augmenter la surface de voilure totale de l'ensemble de propulsion vélique, sans augmenter la longueur totale du navire 100, et permet en outre de régler la surface de voilure en fonction de la vitesse du vent et de l'état de mer, afin de garder une force propulsive constante.

L'agencement de plusieurs voiles rigides 10 de hauteurs H différentes du troisième mode de réalisation peut correspondre sensiblement à l'agencement décrit ci-dessus concernant le navire 100 selon le premier mode de réalisation.

Le troisième mode de réalisation peut être implémenté indépendamment du premier mode de réalisation et du deuxième mode de réalisation, ou en combinaison avec le premier mode de réalisation et/ou avec le deuxième mode de réalisation.

Le troisième mode de réalisation est compatible avec chacune des caractéristiques décrites ci-dessus concernant le premier mode de réalisation. Le navire 100 selon le troisième mode de réalisation peut ainsi comprendre un, plusieurs, ou la totalité des éléments décrits ci-dessus concernant le premier mode de réalisation, par exemple peut comprendre plusieurs voiles rigides 10 et/ou embases 20, le cas échéant avec élément rotatif 21 et le système mécanique de pivotement 22, tels que décrits ci-dessus, une ou plusieurs barres de flèches et haubans tels que décrits ci-dessous, etc. Le troisième mode de réalisation est en particulier compatible du rangement en épi et/ou du rangement dans une position couchée sur la tranche ou dans une position couchée en tuilage, tels que décrit ci-dessus concernant le premier mode de réalisation. Ainsi, dans la position couchée sur la tranche et/ou dans la position couchée en tuilage, l'axe de voile A peut être sensiblement parallèle au plan de navire, et former un angle non nul par rapport à l'axe de navire N, de sorte que plusieurs voiles rigides 10 de l'ensemble de propulsion vélique sont rangées en épi.

### Quatrième mode de réalisation

Dans un quatrième mode de réalisation, un ensemble de propulsion vélique pour un navire 100, illustré à titre d'exemple non limitatif en figure 1, comprend :
- une voile rigide 10 formant une aile à profil aérodynamique, la voile rigide 10 comprenant une paroi 11, 12 s'étendant principalement selon un axe de voile A,
- au moins une barre de flèche 81, 82 adaptée pour être montée pivotante par rapport à la paroi 11, 12 de la voile rigide 10, entre une position de navigation dans laquelle la barre de flèche 81, 82 s'étend sensiblement perpendiculairement à la paroi 11, 12 de la voile rigide 10, et une position de rangement dans laquelle la barre de flèche 81, 82 s'étend sensiblement contre la paroi 11, 12 de la voile rigide 10, et
- au moins deux haubans 91, 92 montés sur la barre de flèche 81, 82, dans lequel lorsque la barre de flèche 81, 82 est dans la position de navigation, les haubans 91, 92 s'étendent sensiblement à distance de la paroi 11, 12 de la voile rigide 10, et lorsque la barre de flèche 81, 82 est dans la position de rangement, les haubans 91, 92 s'étendent sensiblement contre la paroi 11, 12 de la voile rigide 10.

La barre de flèche 81, 82 est montée sur la voile rigide 10, et non sur un mât. La barre de flèche 81, 82 peut pivoter pour se replier entièrement contre la voile rigide 10. Ainsi, l'ensemble de propulsion vélique selon le quatrième mode de réalisation permet à la barre de flèche 81, 82 de pivoter pour être rangée contre la paroi 11, 12 de la voile rigide 10. Par « contre », il est entendu que lorsque la barre de flèche 81, 82 est dans la position de rangement, la barre de flèche 81, 82 et les haubans 91, 92 sont situés à proximité immédiate de la paroi 11, 12 de la voile rigide 10. La barre de flèche 81, 82 et/ou les haubans 91, 92 peuvent être au contact de la voile rigide 10 sur une partie ou toute leur dimension, notamment en fonction d'une forme du profil aérodynamique de la voile rigide 10.

Lorsque la barre de flèche 81, 82 est dans la position de rangement, l'ensemble de propulsion vélique présente un encombrement réduit du fait du repliement de la barre de flèche 81, 82 contre la voile rigide 10, et prend donc moins de place sur le navire 100, en particulier lorsque la voile rigide 10 est couchée sur le pont 30 du navire 100. En d'autres termes, la présence de la barre de flèche 81, 82 et des haubans 91, 92 permet de rigidifier la voile rigide 10, sans augmenter de manière significative l'encombrement de l'ensemble de propulsion vélique lorsque la barre de flèche 81, 82 est dans la position de rangement.

Les haubans 91, 92 sont des élément faciles à fabriquer. Les haubans 91, 92 sont montés sur la barre de flèche 81, 82 et ne sont pas reliés au pont 30 du navire 100. Les haubans 91, 92 sont notamment utiles lorsque la voile rigide 10 présente des dimensions importantes, les haubans permettant alors de conférer à la voile rigide 10 la rigidité nécessaire pour la navigation dans des conditions de navigation variées. En outre, la présence des haubans 91, 92 permet d'utiliser des voiles rigides 10 par exemple faites en aluminium, ce qui diminue ainsi le coût de la voile rigide 10.

La barre de flèche 81, 82 permet d'écarter les haubans 91, 92 de la voile rigide 10 dans la position de navigation, de sorte que les haubans 91, 92 tendus et écartés de la voile rigide 10 par la barre de flèche 81, 82 apportent une résistance mécanique de la voile rigide 10 aux sollicitations de flexion transversale, et raidissent ainsi la voile rigide 10.

Lorsque la barre de flèche 81, 82 est dans la position de navigation, les haubans 91, 92 peuvent s'étendre soit sensiblement parallèlement à l'axe de voile A et à la paroi 11, 12 de la voile rigide 10 et à distance de la paroi 11, 12 de la voile rigide 10, soit en diagonale par rapport à l'axe de voile A et à la paroi 11, 12 de la voile rigide 10. Lorsque la barre de flèche 81, 82 est dans la position de rangement, les haubans 91, 92 peuvent s'étendre soit sensiblement parallèlement à l'axe de voile A et à la paroi 11, 12 de la voile rigide 10, sensiblement contre la paroi 11, 12 de la voile rigide 10, soit sensiblement en diagonale par rapport à l'axe de voile A et sensiblement parallèlement à la paroi 11, 12 de la voile rigide 10, sensiblement contre la paroi 11, 12 de la voile rigide 10. Lorsque la barre de flèche 81, 82 est dans la position de rangement, la barre de flèche 81, 82 s'étend sensiblement parallèlement à la paroi 11, 12 de la voile rigide 10.

Lorsque la barre de flèche 81, 82 est dans la position de navigation et que les haubans 91, 92 s'étendent sensiblement parallèlement à l'axe de voile A, les haubans 91, 92 peuvent s'étendre à une distance correspondant sensiblement à une longueur de la barre de flèche 91, 92 par rapport à la paroi 11, 12 de la voile rigide.

Ce quatrième mode de réalisation peut être implémenté indépendamment du premier mode de réalisation et/ou du deuxième mode de réalisation et/ou du troisième mode de réalisation, ou en combinaison avec le premier mode de réalisation et/ou avec le deuxième mode de réalisation et/ou avec le troisième mode de réalisation.

Le quatrième mode de réalisation est en particulier compatible avec chacune des caractéristiques décrites ci-dessus concernant le premier mode de réalisation. Le navire 100 selon le quatrième mode de réalisation peut ainsi comprendre un, plusieurs, ou la totalité des éléments décrits ci-dessus concernant le premier mode de réalisation, par exemple peut comprendre plusieurs voiles rigides 10 telles que décrites ci-dessus concernant le premier mode de réalisation, le cas échéant fabriquée par tronçons 18, etc. Les définitions instaurées en relation avec le premier mode de réalisation, en particulier relatives à la géométrie des voiles rigides 10 et/ou du navire, sont valables également pour le quatrième mode de réalisation.

Le quatrième mode de réalisation est en particulier compatible du rangement en épi et du rangement dans une position couchée sur la tranche ou dans une position couchée en tuilage, tels que décrit ci-dessus concernant le premier mode de réalisation. Ainsi, dans la position couchée sur la tranche et/ou dans la position couchée en tuilage, l'axe de voile A peut être sensiblement parallèle au plan de navire, et former un angle non nul par rapport à l'axe de navire N, de sorte que plusieurs voiles rigides 10 de l'ensemble de propulsion vélique sont rangées en épi.

En outre, le quatrième mode de réalisation est compatible de l'agencement de plusieurs voiles rigides 10 de hauteurs H différentes tel que décrit ci-dessus concernant le premier mode de réalisation. Ainsi, les voiles rigides 10 de plus petites dimensions peuvent être agencées plus proches du centre 103 du navire 100.

La barre de flèche 81, 82 peut être inclinée de moins de 10° par rapport à un plan normal à l'axe de voile A, par exemple peut être inclinée d'un angle compris entre 1° et 8° par rapport au plan normal à l'axe de voile A, ou peut s'étendre sensiblement dans le plan normal à l'axe de voile A.

La barre de flèche 81, 82 peut être déplacée entre la position de navigation et la position de rangement par pivotement autour d'un axe de pivotement de la barre de flèche 85, ledit axe de pivotement de la barre de flèche 85 étant incliné de moins de 10° par rapport à l'axe de voile A, par exemple étant incliné d'un angle compris entre 1° et 8° par rapport à l'axe de voile A, ou correspondant sensiblement à l'axe de voile A. Ainsi, le point d'ancrage bas du hauban bas 91, 92 est éloigné d'un centre du pied 15 de la voile rigide 10, ce qui permet d'augmenter la résistance structurelle du pied 15 de la voile rigide 10.

Ainsi, la barre de flèche 81, 82 reste sensiblement située dans un plan normal à l'axe de voile A quelle que soit la position de la barre de flèche 81, 82, la barre de flèche 81, 82 étant sensiblement perpendiculaire à la voile rigide 10 dans la position de navigation et sensiblement parallèle à la voile rigide 10 dans la position de rangement. Le pivotement de la barre de flèche 81, 82 est facilité et l'encombrement de l'ensemble de propulsion vélique lorsque la barre de flèche 81, 82 est dans la position de rangement est diminué.

La barre de flèche 81, 82 peut être pivotée entre la position de navigation et la position de rangement par pivotement d'un angle de sensiblement 90° autour de l'axe de pivotement.

Chaque voile rigide 10 de l'ensemble de propulsion vélique peut comprendre au moins un mécanisme de rotation comprenant un pivot 84 orienté suivant l'axe de pivotement de la barre de flèche 85, et un actionneur, non représenté, adapté pour entraîner au moins une barre de flèche 81, 82 en rotation de sorte à régler la position de la barre de flèche 81, 82 entre la position de navigation et la position de rangement par pivotement de la barre de flèche 81, 82 autour de l'axe de pivotement de la barre de flèche 85. Le pivot 84 du mécanisme de rotation peut former une jonction entre la barre de flèche 81, 82 et la voile rigide 10. Le pivot 84 du mécanisme de rotation peut être situé en une position sensiblement en abord de l'axe de voile A, et être disposé dans un plan normal à l'axe de voile A. Une extrémité de la barre de flèche 81, 82 est montée pivotante sur le pivot 84 du mécanisme de rotation autour d'un axe de rotation du pivot correspondant à l'axe de pivotement de la barre de flèche 85, au niveau d'un point de pivotement de la barre de flèche 81, 82, le point de pivotement étant par exemple formé dans le pivot 84.

Ainsi, chaque barre de flèche 81, 82 est adaptée pour être montée pivotante par rapport à la paroi 11, 12 de la voile rigide 10 au niveau du pivot 84 du mécanisme de rotation de la barre de flèche 81, 82, chaque barre de flèche 81, 82 étant montée pivotante entre la position de navigation et la position de rangement autour de l'axe de pivotement de la barre de flèche 85 au niveau du point de pivotement de la barre de flèche 81, 82.

L'actionneur du mécanisme de rotation peut être par exemple un vérin, un ensemble pignon-crémaillère, ou des cordages adaptés pour tirer la barre de flèche 81, 82.

La barre de flèche 81, 82 peut être adaptée pour être montée pivotante entre la position de navigation et la position de rangement autour d'un axe de pivotement de la barre de flèche 85 au niveau du point de pivotement, les haubans 91, 92 étant montés sur la barre de flèche 81, 82 et étant montés en outre sur la voile rigide 10 au niveau de points de connexion respectifs, dans lequel le point de pivotement de la barre de flèche 81, 82 est aligné avec les points de connexion des hauban 91, 92 le long de l'axe de voile A, de sorte que les haubans 91, 92 restent tendus que la barre de flèche 81, 82 soit dans la position de navigation ou dans la position de rangement. Par exemple, une barre de flèche 81, 82 et deux haubans 91, 92 peuvent être présents, chaque hauban 91, 92 étant montés en une première extrémité sur la barre de flèche 81, 82 et en une deuxième extrémité sur la paroi 11, 12 de la voile rigide 10 au niveau d'un point de connexion, les points de connexion des deux haubans 91, 92 étant alignés avec le point de pivotement de la barre de flèche 81, 82.

Lorsqu'une pluralité de barres de flèches 81, 82 sont présentes, une pluralité de mécanismes de rotation correspondants peuvent être présents, chaque mécanisme de rotation étant adapté pour entraîner en rotation une barre de flèche 81, 82 correspondante. Les axes de pivotement 85 de tous les pivots 84 des mécanismes de rotation peuvent être alignés et coïncider, de sorte que les axes de pivotement 85 de toutes les barres de flèche 81, 82 coïncident. Les pivots 84 des mécanismes de rotation peuvent être situés à distance les uns des autres le long de l'axe de voile A, en particulier selon l'espacement des barres de flèches 81, 82 le long de l'axe de voile A, par exemple peuvent être régulièrement espacés le long de l'axe de voile A.

Le ou les actionneur(s) du mécanisme de rotation peu(ven)t être adapté(s) pour entraîner simultanément en rotation l'ensemble des barres de flèche 81, 82, de sorte à faire passer les barres de flèches 81, 82 entre la position de navigation et la position de rangement tout en conservant la tension des haubans 91, 92.

Lorsque la voile rigide 10 est constituée d'une pluralité de tronçons 18, le pivot 84 du mécanisme de rotation peut être monté au niveau d'une jonction entre deux tronçons 18 de la voile rigide 10. En effet, la jonction entre deux tronçons de la voile rigide 18 est particulièrement solide en termes de structure.

Le pivot 84 du mécanisme de rotation peut comprendre deux chapes, ainsi qu'illustré à titre d'exemple non limitatif en figure 9, une rotule, ou tout autre élément adapté pour entraîner au moins une barre de flèche 81, 82 en rotation. Par exemple, le pivot du mécanisme de rotation illustré en figure 9 comprend deux chapes 84 rigidement fixées à une paroi 11, 12 de la voile rigide 10. Les deux chapes 84 sont disposées de part et d'autre de la barre de flèche 81, 82 correspondante, une extrémité de la barre de flèche 81, 82 correspondante étant montée entre les deux chapes 84, la barre de flèche 81, 82 correspondante étant tenue entre les deux chapes 84. Chaque chape 84 comprend une ouverture traversante, les ouvertures traversantes des deux chapes étant alignées le long de l'axe de pivotement de la barre de flèche 81, 82. L'extrémité de la barre de flèche 81, 82 montée sur les chapes 84 comprend également une ouverture traversante adaptée pour être alignée avec les ouvertures traversantes des deux chapes 84, les ouvertures traversantes de la barre de flèche 81, 82 correspondant au point de pivotement de la barre de flèche 81, 82.

Le mécanisme de rotation peut comprendre en outre un pivot de hauban rigidement fixé à la voile rigide 10 et sur lequel une extrémité du hauban 91, 92 le plus proche du pont 30 du navire 100 est fixé, et un pivot de hauban rigidement fixé à la voile rigide et sur lequel une extrémité du hauban 91, 92 le plus éloigné du pont 30 du navire 100 est fixé.

Dans la position de rangement, la barre de flèche 81, 82 et/ou les haubans 91, 92 peuvent être au moins partiellement au contact de la voile rigide 10. Ainsi, l'encombrement de l'ensemble de propulsion vélique est encore diminué.

L'ensemble de propulsion vélique peut comprendre une pluralité de barres de flèche 81, 82 et une pluralité de haubans 91, 92.

Chaque barre de flèche de la pluralité de barres de flèches 81, 82 peut être adaptée pour être montée pivotante par rapport à une paroi 11, 12 de la voile rigide 10 au niveau d'un mécanisme de rotation 84 correspondant de la barre de flèche 81, 82.

Chaque hauban de la pluralité de haubans 91, 92 peut être monté sur au moins une barre de flèche 81, 82, au moins deux haubans de la pluralité de haubans 91, 92 étant adaptés pour être montés en outre sur la voile rigide 10 au niveau de points de connexion respectifs.

Les points de pivotement des barres de flèche 81, 82 peuvent être alignés entre eux et être alignés avec les points de connexion des haubans 91, 92 le long de l'axe de voile A, de sorte que les haubans 91, 92 restent tendus, que la barre de flèche 81, 82 soit dans la position de navigation ou dans la position de rangement.

Un hauban 91, 92 peut être un filin qui comprend une première extrémité et une deuxième extrémité sensiblement opposée à la première extrémité. Une barre de flèche 81, 82 peut être une barre rigide qui comprend une première extrémité et une deuxième extrémité sensiblement opposée à la première extrémité. La barre rigide de la barre de flèche 81, 82 est adaptée pour supporter une compression due à la tension des haubans 91, 92.

Chaque hauban 91, 92 peut être monté d'une part sur une barre de flèche 81, 82 et d'autre part sur une autre barre de flèche 81, 82 ou sur la voile rigide 10. Chaque barre de flèche 81, 82 est montée sur la voile rigide 10 en sa première extrémité. Un hauban 91, 92 est monté sur la barre de flèche 81, 82 au niveau de la deuxième extrémité de la barre de flèche 81, 82.

Un hauban 91, 92 qui s'étend sensiblement parallèlement à l'axe de voile A, ou hauban parallèle 91, 92, est monté en sa première extrémité sur une première barre de flèche 81, 82 et en sa deuxième extrémité sur une deuxième barre de flèche 81, 82, la deuxième barre de flèche 81, 82, étant située à distance de la première barre de flèche 81, 82 le long de l'axe de voile A.

Un hauban 91, 92 qui s'étend en diagonale par rapport à l'axe de voile A, ou hauban diagonal 91, 92, est monté en sa première extrémité sur une barre de flèche 81, 82 et en sa deuxième extrémité sur la voile rigide 10 au niveau d'un point de connexion. Le hauban diagonal 91, 92 peut être monté sur un pivot 84 d'un mécanisme de rotation de la barre de flèche 81, 82, le point de connexion correspondant à un point de montage du hauban 91, 92 sur le pivot 84 du mécanisme de rotation. Ainsi, les au moins deux haubans de la pluralité de haubans 91, 92 qui sont montés d'une part sur une barre de flèche 81, 82 et d'autre part sur la voile rigide 10 comprennent les haubans diagonaux 91, 92. En particulier, un hauban diagonal 91, 92 peut être monté en sa première extrémité sur une barre de flèche 81, 82 et en sa deuxième extrémité sur le pied 15 de la voile rigide 10. Ainsi, le hauban diagonal 91, 92 le plus proche du pont 30 est repris au niveau du pied 15 de la voile rigide 10, et non sur le pont 30.

Plusieurs haubans de la pluralité de haubans 91, 92 peut être formée d'un seul tenant les uns avec les autres. Par exemple, un hauban parallèle et un hauban diagonal peuvent être formés d'un unique filin qui s'étend dans une première partie correspondant au hauban parallèle sensiblement parallèlement à l'axe de voile A, et qui s'étend dans une deuxième partie correspondant au hauban diagonal sensiblement en diagonale par rapport à l'axe de voile A.

Le hauban de la pluralité de haubans 91, 92 qui est situé le plus proche du pont 30 du navire peut être un hauban diagonal dont une première extrémité est montée sur la barre de flèche 81, 92 qui est située la plus proche du pont 30 du navire, et une deuxième extrémité est montée sur le pied 15 de la voile rigide 10. Ainsi, les haubans 91, 92 ne viennent pas sur le pont 30 du navire 100, contrairement aux mâts haubanés classiques.

La voile rigide 10 peut comprendre une première paroi 11 et une deuxième paroi 12. L'ensemble comprend :
- une pluralité de premières barres de flèche 81, respectivement de deuxièmes barres de flèches 82, adaptées pour être montées pivotantes par rapport à la première paroi 11, respectivement à la deuxième paroi 12, entre la position de navigation et la position de rangement, et
- une pluralité de premiers haubans 91, respectivement de deuxièmes haubans 92, chaque hauban de la pluralité de premiers haubans 91, respectivement de deuxièmes haubans 92, étant monté sur au moins l'une des barres de flèches de la pluralité de premières barres de flèche 81, respectivement de deuxièmes barres de flèches 82.

Les premières barres de flèche 81 et les premiers haubans 91 s'étendent du côté de la première paroi 11. Les deuxièmes barres de flèche 82 et les deuxièmes haubans 92 s'étendent du côté de la deuxième paroi 12. Plusieurs, ou tous, les premiers haubans 91, peuvent être formés d'un seul tenant. Plusieurs, ou tous, les deuxièmes haubans 92, peuvent être formés d'un seul tenant.

La voile rigide 10 comprend :
- une configuration de navigation, dans laquelle la pluralité de premières barres de flèches 81, respectivement de deuxièmes barres de flèches 82, est dans la position de navigation, et
- une configuration de rangement, dans laquelle la pluralité de premières barres de flèches 81, respectivement de deuxièmes barres de flèches 82, est dans la position de rangement.

Ainsi, des barres de flèche 81, 82 et des haubans 91, 92 sont installés de chaque côté de la voile rigide 10, ce qui permet de rigidifier au mieux la voile rigide 10.

La position de navigation de chacune des barres de flèches de la pluralité de premières barres de flèches 81 et de la pluralité de deuxièmes barres de flèches 82 peut être telle que dans la position de navigation, la barre de flèche 81, 82 s'étend sensiblement perpendiculairement à la paroi 11, 12 de la voile rigide 10 sur laquelle est montée. La position de rangement de chacune des barres de flèches de la pluralité de premières barres de flèches 81 et de la pluralité de deuxièmes barres de flèches 82 peut être telle que dans la position de rangement, la barre de flèche 81, 82 s'étend sensiblement contre la paroi 11, 12 de la voile rigide 10 sur laquelle elle est montée.

Chaque barre de flèche de la pluralité de premières barres de flèches 81 est montée du côté de la première paroi 11 de la voile rigide 10 de sorte à s'étendre contre la première paroi 11 de la voile rigide 10 dans la position de rangement. Chaque barre de flèche de la pluralité de deuxièmes barres de flèches 82 est montée du côté de la deuxième paroi 12 de la voile rigide 10 de sorte à s'étendre contre la deuxième paroi 12 de la voile rigide 10 dans la position de rangement.

Dans la configuration de rangement, l'ensemble de propulsion vélique présente un encombrement réduit, les barres de flèches 81, 82 et les haubans 91, 92 n'augmentant pas de manière significative l'encombrement par rapport à l'encombrement d'une voile rigide 10 sans barres de flèche 81, 82 ni haubans 91, 92.

La barre de flèche 81, 82 peut être montée de sorte à pouvoir être pivotée, par le biais du mécanisme de rotation 84, selon un continuum de positions entre la position de navigation et la position de rangement. Ainsi, toutes les orientations de la barre de flèche 81, 82 par rapport à la paroi 11, 12 de la voile rigide 10 sur laquelle elle est montée sont accessibles.

La voile rigide 10 peut être pivotante autour d'un axe de pivotement de couchage P, un changement de position de la voile rigide 10 entre une position hissée et une position couchée comprenant un pivotement de la voile rigide 10 autour de l'axe de pivotement de couchage P. Dans la position hissée, l'axe de voile A est sensiblement perpendiculaire à un plan de navire formé par l'axe de pivotement de couchage P et un axe de navire N, et dans la position couchée, l'axe de voile A est sensiblement parallèle au plan de navire.

Lorsque la voile rigide 10 est dans la position couchée, l'axe de voile A peut former un angle non nul par rapport à l'axe de navire N. Le rangement en épi des voiles rigides 10 de l'ensemble de propulsion vélique selon le quatrième mode de réalisation peut correspondre au rangement en épi décrit ci-dessus concernant le premier mode de réalisation.

En particulier, l'ensemble de propulsion vélique peut comprendre au moins deux voiles rigides 10 agencées de sorte que dans la position couchée, les axes de voile A des au moins deux voiles rigides 10 sont parallèles entre eux et situés à distance l'un de l'autre le long de l'axe de navire N, de sorte que les au moins deux voiles rigides 10 de l'ensemble de propulsion vélique sont rangées en épi sur le navire 100 lorsqu'elles sont dans la position couchée. L'angle formé entre l'axe de voile A et l'axe de navire N lorsque la voile rigide 10 est dans la position couchée peut être compris entre 5° et 45°, de préférence peut être compris entre 5° et 15°.

L'ensemble de propulsion vélique peut comprendre en outre une embase 20, la voile rigide 10 étant montée sur l'embase 20. L'embase 20 peut correspondre à l'embase 20 décrite ci-dessus concernant le premier mode de réalisation. En particulier, l'embase 20 peut comprendre un élément rotatif 21 monté pivotant autour de l'axe de voile A de sorte qu'un pivotement de l'élément rotatif 21 règle une incidence de la voile rigide 10 lorsque la voile rigide 10 est dans la position hissée. L'élément rotatif 21 peut être une couronne rotative ou un axe sur paliers. L'embase 20 peut comprendre des moyens de blocage angulaire et/ou un ou plusieurs systèmes mécaniques de pivotements 22 tels que décrits ci-dessus concernant le premier mode de réalisation. La voile rigide 10 est montée sur l'embase 20 de manière solidaire de l'embase 20 en rotation autour de l'axe de voile A lorsque la voile rigide 10 est dans la position hissée et de manière pivotante par rapport à l'embase 20 autour de l'axe de pivotement de couchage P.

L'ensemble de propulsion vélique peut comprendre en outre un panneau photovoltaïque adapté pour être monté sur la paroi 11, 12 de la voile rigide 10. Le panneau photovoltaïque peut correspondre au panneau photovoltaïque selon le premier mode de réalisation.

Un ensemble de propulsion vélique peut comprendre une pluralité de voiles rigides 10.

Chaque voile rigide 10 de la pluralité de voiles rigides 10 de l'ensemble de propulsion vélique peut comprendre une ou plusieurs barres de flèche 81, 82 respectives, et un ou plusieurs haubans 91, 92 respectifs, qui peuvent présenter les mêmes caractéristiques que celles des barres de flèche 81, 82 ou haubans 91, 92 décrits ci-dessus.

Chaque voile rigide 10 peut en particulier comprendre une pluralité de premières barres de flèche 81 montées sur une première paroi 11 de la voile rigide 10, une pluralité de deuxièmes barres de flèche 82 montées sur une deuxième paroi 12 de la voile rigide 10, une pluralité de premiers haubans 91 montés sur la pluralité de premières barres de flèches 81, et une pluralité de deuxièmes haubans 92 montés sur la pluralité de deuxièmes barres de flèches 82.

Le nombre respectivement de deuxièmes barres de flèches 82 et de deuxièmes haubans 92 peut être égal au nombre respectivement de premières barres de flèches 81 et de premiers haubans 91. Les premières et deuxièmes barres de flèches 81, 82 peuvent être agencées de manière sensiblement symétrique autour de l'axe de voile A, en particulier lorsque la voile rigide 10 présente un profil aérodynamique NACA symétrique. Les premiers et deuxièmes haubans 91, 92 peuvent être agencés de manière sensiblement symétrique autour de la voile rigide 10, en particulier lorsque la voile rigide 10 présente un profil aérodynamique NACA symétrique. Des barres de flèche 81, 82 et haubans 91, 92 symétriques améliorent la rigidification de la voile rigide 10 par les haubans 91, 92 et la facilité de pivotement des barres de flèche 81, 82.

Pour chaque voile rigide 10 de l'ensemble de propulsion vélique, le hauban de la pluralité de haubans 91, 92 qui est situé le plus proche du pont 30 du navire peut être un hauban diagonal dont une première extrémité est montée sur la barre de flèche 81, 92 qui est située la plus proche du pont 30 du navire, et une deuxième extrémité est montée sur le pied 15 de la voile rigide 10. Pour chaque voile rigide 10 de l'ensemble de propulsion vélique, les points de pivotement des barres de flèche 81, 82 peuvent être alignés entre eux et être alignés avec les points de connexion des haubans 91, 92 le long de l'axe de voile A, de sorte que les haubans 91, 92 restent tendus, que la barre de flèche 81, 82 soit dans la position de navigation ou dans la position de rangement.

La figure 2a, la figure 2b, la figure 4a et la figure 5a illustrent un exemple non limitatif d'un ensemble de propulsion vélique comprenant cinq voiles rigides 10. Ainsi qu'illustré à titre d'exemple non limitatif en figure 1, chaque voile rigide 10 comprend trois premières barres de flèche 81 montées sur la première paroi 11 de la voile rigide 10 via trois mécanismes de rotation 84 respectifs, et six premiers haubans 91 montés sur les trois premières barres de flèche 81. Chaque voile rigide 10 comprend en outre trois deuxièmes barres de flèche 82 montées sur la deuxième paroi 12 de la voile rigide 10 via trois mécanismes de rotation 84 respectifs, et six deuxièmes haubans 92 montés sur les trois deuxièmes barres de flèche 82.

Un navire 100 peut comprendre un ensemble de propulsion vélique selon le quatrième mode de réalisation décrit ci-dessus. L'ensemble de propulsion vélique comprend une ou plusieurs voiles rigides 10 telles que décrites ci-dessus. Le navire 100 peut comprendre des caractéristiques correspondant aux caractéristiques décrites ci-dessus concernant le premier mode de réalisation.

D'autres modes de réalisation peuvent être envisagés et une personne du métier peut facilement modifier les modes ou exemples de réalisation exposés ci-dessus ou en envisager d'autres tout en restant dans la portée de l'invention.

## Revendications

1. Ensemble de propulsion vélique pour un navire, comprenant :
- une voile rigide (10) formant une aile à profil aérodynamique, la voile rigide (10) comprenant une paroi (11, 12) s'étendant principalement selon un axe de voile (A),
- au moins une barre de flèche (81, 82) adaptée pour être montée pivotante par rapport à la paroi (11, 12) de la voile rigide (10), entre une position de navigation dans laquelle la barre de flèche (81, 82) s'étend sensiblement perpendiculairement à la paroi (11, 12) de la voile rigide (10), et une position de rangement dans laquelle la barre de flèche (81, 82) s'étend sensiblement contre la paroi (11, 12) de la voile rigide (10), et
- au moins deux haubans (91, 92) montés sur la barre de flèche (81, 82), dans lequel lorsque la barre de flèche (81, 82) est dans la position de navigation, les haubans (91, 92) s'étendent sensiblement à distance de la paroi (11, 12) de la voile rigide (10), et lorsque la barre de flèche (81, 82) est dans la position de rangement, les haubans (91, 92) s'étendent sensiblement contre la paroi (11, 12) de la voile rigide (10).

2. Ensemble de propulsion vélique selon la revendication 1, dans lequel la barre de flèche (81, 82) est inclinée de moins de 10° par rapport à un plan normal à l'axe de voile (A), par exemple s'étend sensiblement dans le plan normal à l'axe de voile (A), et dans lequel la barre de flèche (81, 82) est déplacée entre la position de navigation et la position de rangement par pivotement autour d'un axe de pivotement de la barre de flèche (85), ledit axe de pivotement de la barre de flèche (85) étant incliné de moins de 10° par rapport à l'axe de voile (A), par exemple correspondant sensiblement à l'axe de voile (A).

3. Ensemble de propulsion vélique selon la revendication 1 ou la revendication 2, dans lequel chaque voile rigide (10) comprend un mécanisme de rotation comprenant un pivot (84) orienté suivant l'axe de pivotement de la barre de flèche (85), et un actionneur adapté pour entraîner une barre de flèche (81, 82) correspondante en rotation de sorte à régler la position de la barre de flèche (81, 82) correspondante entre la position de navigation et la position de rangement, dans lequel le pivot (84) du mécanisme de rotation comprend deux chapes rigidement fixées à une paroi (11, 12) de la voile rigide (10) et disposées de part et d'autre de la barre de flèche (81, 82) correspondante.

4. Ensemble de propulsion vélique selon l'une quelconque des revendications précédentes, dans lequel dans la position de rangement, la barre de flèche (81, 82) et/ou les haubans (91, 92) est/sont au moins partiellement au contact de la voile rigide (10).

5. Ensemble de propulsion vélique selon l'une quelconque des revendications précédentes, dans lequel la barre de flèche (81, 82) est adaptée pour être montée pivotante entre la position de navigation et la position de rangement autour d'un axe de pivotement de la barre de flèche (85) au niveau d'un point de pivotement, les haubans (91, 92) étant montés sur la barre de flèche (81, 82) et étant montés en outre sur la voile rigide (10) au niveau de points de connexion respectifs, dans lequel le point de pivotement de la barre de flèche (81, 82) est aligné avec les points de connexions des haubans (91, 92) le long de l'axe de voile (A), de sorte que les haubans (91, 92) restent tendus que la barre de flèche (81, 82) soit dans la position de navigation ou dans la position de rangement.

6. Ensemble de propulsion vélique selon l'une quelconque des revendications précédentes, dans lequel la voile rigide (10) comprend une première paroi (11) et une deuxième paroi (12), dans lequel l'ensemble comprend :
- une pluralité de premières barres de flèche (81), respectivement de deuxièmes barres de flèches (82), adaptées pour être montées pivotantes par rapport à la première paroi (11), respectivement à la deuxième paroi (12), entre la position de navigation et la position de rangement, et
- une pluralité de premiers haubans (91), respectivement de deuxièmes haubans (92), chaque hauban de la pluralité de premiers haubans (91), respectivement de deuxièmes haubans (92), étant monté sur au moins l'une des barres de flèches de la pluralité de premières barres de flèche (81), respectivement de deuxièmes barres de flèches (82),
et dans lequel la voile rigide (10) comprend :
- une configuration de navigation, dans laquelle la pluralité de premières barres de flèches (81) et la pluralité de deuxièmes barres de flèches (82) sont dans la position de navigation, et
- une configuration de rangement, dans laquelle la pluralité de premières barres de flèches (81) et la pluralité de deuxièmes barres de flèches (82) sont dans la position de rangement.

7. Ensemble de propulsion vélique selon l'une quelconque des revendications précédentes, dans lequel la voile rigide (10) est montée pivotante autour d'un axe de pivotement de couchage (P), un changement de position de la voile rigide (10) entre une position hissée et une position couchée comprenant un pivotement de la voile rigide (10) autour de l'axe de pivotement de couchage (P), dans lequel dans la position hissée, l'axe de voile (A) est sensiblement perpendiculaire à un plan de navire (100) formé par l'axe de pivotement de couchage (P) et un axe de navire (N), et dans la position couchée, l'axe de voile (A) est sensiblement parallèle au plan de navire (100).

8. Ensemble de propulsion vélique selon la revendication 7, comprenant en outre une embase (20), la voile rigide (10) étant montée sur l'embase (20), l'embase (20) comprenant un élément rotatif (21) monté pivotant autour de l'axe de voile (A) de sorte qu'un pivotement de l'élément rotatif (21) règle une incidence de la voile rigide (10) lorsque la voile rigide (10) est dans la position hissée, dans lequel la voile rigide (10) est montée sur l'embase (20) de manière solidaire de l'embase (20) en rotation autour de l'axe de voile (A) lorsque la voile rigide (10) est dans la position hissée et de manière pivotante par rapport à l'embase (20) autour de l'axe de pivotement de couchage (P).

9. Ensemble de propulsion vélique selon l'une quelconque des revendications précédentes, comprenant en outre au moins un panneau photovoltaïque adapté pour être monté sur la paroi (11, 12) de la voile rigide (10).

10. Navire (100) comprenant un ensemble de propulsion vélique selon l'une quelconque des revendications précédentes, ledit ensemble de propulsion vélique comprenant une ou plusieurs voiles rigides (10).

## Patentansprüche

1. Segelantriebsanordnung für ein Schiff, umfassend:
- ein starres Segel (10), das einen Flügel mit aerodynamischem Profil bildet, wobei das starre Segel (10) eine Wand (11, 12) umfasst, die sich hauptsächlich gemäß einer Segelachse (A) erstreckt,
- mindestens eine Sailingstange (81, 82), die zur schwenkbaren Anbringung relativ zur Wand (11, 12) des starren Segels (10) zwischen einer Segelposition, in der sich die Sailingstange (81, 82) im Wesentlichen senkrecht zur Wand (11, 12) des starren Segels (10) erstreckt, und einer Verstauposition, in der sich die Sailingstange (81, 82) im Wesentlichen an der Wand (11, 12) des starren Segels (10) erstreckt, geeignet ist, und
- mindestens zwei Wanten (91, 92), die an der Salingstange (81, 82) angebracht sind, wobei sich die Wanten (91, 92), wenn sich die Salingstange (81, 82) in der Segelposition befindet, im Wesentlichen beabstandet von der Wand (11, 12) des starren Segels (10) erstrecken und sich die Wanten (91, 92), wenn sich die Salingstange (81, 82) in der Verstauposition befindet, im Wesentlichen an der Wand (11, 12) des starren Segels (10) erstrecken.

2. Segelantriebsanordnung nach Anspruch 1, wobei die Sailingstange (81, 82) um weniger als 10° relativ zu einer zur Segelachse (A) senkrechten Ebene geneigt ist, sich beispielsweise im Wesentlichen in der zur Segelachse (A) senkrechten Ebene erstreckt, und wobei die Sailingstange (81, 82) zwischen der Segelposition und der Verstauposition durch Schwenken um eine Sailingstangen-Schwenkachse (85) bewegt wird, wobei die Sailingstangen-Schwenkachse (85) um weniger als 10° relativ zur Segelachse (A) geneigt ist, beispielsweise im Wesentlichen der Segelachse (A) entspricht.

3. Segelantriebsanordnung nach Anspruch 1 oder Anspruch 2, wobei jedes starre Segel (10) einen Drehmechanismus umfasst, der einen Drehzapfen (84) umfasst, der gemäß der Sailingstangen-Schwenkachse (85) ausgerichtet ist, und einen Aktuator, der zum Drehantrieb einer entsprechenden Sailingstange (81, 82) derart geeignet ist, dass die Position der entsprechenden Sailingstange (81, 82) zwischen der Segelposition und der Verstauposition eingestellt wird, wobei der Drehzapfen (84) des Drehmechanismus zwei Kappen umfasst, die starr an einer Wand (11, 12) des starren Segels (10) befestigt und auf beiden Seiten der entsprechenden Sailingstange (81, 82) angeordnet sind.

4. Segelantriebsanordnung nach einem der vorstehenden Ansprüche, wobei in der Verstauposition die Sailingstange (81, 82) und/oder die Wanten (91, 92) zumindest teilweise mit dem starren Segel (10) in Kontakt steht/stehen.

5. Segelantriebsanordnung nach einem der vorstehenden Ansprüche, wobei die Salingstange (81, 82) zur schwenkbaren Anbringung zwischen der Segelposition und der Verstauposition um eine Schwenkachse der Salingstange (85) im Bereich eines Schwenkpunkts geeignet ist, wobei die Wanten (91, 92) an der Sailingstange (81, 82) angebracht sind und ferner an dem starren Segel (10) im Bereich jeweiliger Verbindungspunkte angebracht sind, wobei der Schwenkpunkt der Sailingstange (81, 82) mit den Verbindungspunkten der Wanten (91, 92) entlang der Segelachse (A) ausgerichtet ist, so dass die Wanten (91, 92) gespannt bleiben, unabhängig davon, ob sich die Salingstange (81, 82) in der Segelposition oder in der Verstauposition befindet.

6. Segelantriebsanordnung nach einem der vorstehenden Ansprüche, wobei das starre Segel (10) eine erste Wand (11) und eine zweite Wand (12) umfasst, wobei die Anordnung umfasst:
- eine Vielzahl erster Sailingstangen (81) beziehungsweise zweiter Sailingstangen (82), die zur schwenkbaren Anbringung relativ zur ersten Wand (11) beziehungsweise zur zweiten Wand (12) zwischen der Segelposition und der Verstauposition geeignet sind, und
- eine Vielzahl erster Wanten (91) beziehungsweise zweiter Wanten (92), wobei jede Want der Vielzahl erster Wanten (91) beziehungsweise zweiter Wanten (92) an mindestens einer der Sailingstangen von der Vielzahl erster Sailingstangen (81) beziehungsweise zweiter Sailingstangen (82) angebracht ist, und wobei das starre Segel (10) umfasst:
- eine Segelkonfiguration, in der sich die Vielzahl erster Sailingstangen (81) und die Vielzahl zweiter Sailingstangen (82) in der Segelposition befinden, und
- eine Verstaukonfiguration, in der sich die Vielzahl erster Sailingstangen (81) und die Vielzahl zweiter Sailingstangen (82) in der Verstauposition befinden.

7. Segelantriebsanordnung nach einem der vorstehenden Ansprüche, wobei das starre Segel (10) um eine Lege-Schwenkachse (P) schwenkbar angebracht ist, wobei eine Positionsänderung des starren Segels (10) zwischen einer gehissten Position und einer gelegten Position ein Schwenken des starren Segels (10) um die Lege-Schwenkachse (P) umfasst, wobei in der gehissten Position die Segelachse (A) im Wesentlichen senkrecht zu einer Schiffsebene (100) ist, die von der Lege-Schwenkachse (P) und einer Schiffsachse (N) gebildet wird, und in der liegenden Position die Segelachse (A) im Wesentlichen parallel zur Schiffsebene (100) ist.

8. Segelantriebsanordnung nach Anspruch 7, die ferner eine Basis (20) umfasst, wobei das starre Segel (10) an der Basis (20) angebracht ist, wobei die Basis (20) ein Drehelement (21) umfasst, das um die Segelachse (A) schwenkbar angebracht ist, so dass ein Schwenken des Drehelements (21) einen Anstellwinkel des starren Segels (10) einstellt, wenn sich das starre Segel (10) in der gehissten Position befindet, wobei das starre Segel (10) fest an der Basis (20) rotatorisch um die Segelachse (A) angebracht ist, wenn das starre Segel (10) in der gehissten Position ist, und schwenkbar relativ zur Basis (20) um die Lege-Schwenkachse (P).

9. Segelantriebsanordnung nach einem der vorstehenden Ansprüche, die ferner mindestens ein Photovoltaikmodul umfasst, das zur Anbringung an der Wand (11, 12) des starren Segels (10) geeignet ist.

10. Schiff (100), umfassend eine Segelantriebsanordnung nach einem der vorstehenden Ansprüche, wobei die Segelantriebsanordnung ein oder mehrere starre Segel (10) umfasst.

## Claims

1. A sailing propulsion assembly for a ship, comprising:
- a rigid sail (10) forming an airfoil wing, the rigid sail (10) comprising a wall (11, 12) extending mainly along a sail axis (A),
- at least one spreader bar (81, 82) adapted to be pivotally mounted relative to the wall (11, 12) of the rigid sail (10), between a navigation position in which the spreader bar (81, 82) extends substantially perpendicular to the wall (11, 12) of the rigid sail (10), and a stowing position in which the spreader bar (81, 82) extends substantially against the wall (11, 12) of the rigid sail (10), and
- at least two shrouds (91, 92) mounted on the spreader bar (81, 82), in which when the spreader bar (81, 82) is in the navigation position, the shrouds (91, 92) extend substantially at a distance from the wall (11, 12) of the rigid sail (10), and when the spreader bar (81, 82) is in the stowing position, the shrouds (91, 92) extend substantially against the wall (11, 12) of the rigid sail (10).

2. The sailing propulsion assembly according to claim 1, wherein the spreader bar (81, 82) is inclined by less than 10° relative to a plane normal to the sail axis (A), for example extends substantially in the plane normal to the sail axis (A), and wherein the spreader bar (81, 82) is moved between the navigation position and the stowing position by pivoting about a spreader bar pivot axis (85), said spreader bar pivot axis (85) being inclined by less than 10° relative to the sail axis (A), for example corresponding substantially to the sail axis (A).

3. The sailing propulsion assembly according to claim 1 or 2, wherein each rigid sail (10) comprises a rotation mechanism comprising a pivot (84) oriented along the spreader bar pivot axis (85), and an actuator adapted to drive in rotation a corresponding spreader bar (81, 82) so as to adjust the position of the corresponding spreader bar (81, 82) between the navigation position and the stowing position, wherein the pivot (84) of the rotation mechanism comprises two yokes rigidly fixed to a wall (11, 12) of the rigid sail (10) and disposed on either side of the corresponding spreader bar (81, 82).

4. The sailing propulsion assembly according to any one of the preceding claims, wherein in the stowing position, the spreader bar (81, 82) and/or the shrouds (91, 92) is/are at least partially in contact with the rigid sail (10).

5. The sailing propulsion assembly according to any one of the preceding claims, wherein the spreader bar (81, 82) is adapted to be pivotally mounted between the navigation position and the stowing position about a spreader bar pivot axis (85) at the level of a pivot point, the shrouds (91, 92) being mounted on the spreader bar (81, 82) and being further mounted on the rigid sail (10) at the level of respective connection points, wherein the pivot point of the spreader bar (81, 82) is aligned with the connection points of the shrouds (91, 92) along the sail axis (A), so that the shrouds (91, 92) remain taut whether the spreader bar (81, 82) is in the navigation position or in the stowing position.

6. The sailing propulsion assembly according to any one of the preceding claims, wherein the rigid sail (10) comprises a first wall (11) and a second wall (12), wherein the assembly comprises:
- a plurality of first spreader bars (81), respectively second spreader bars (82), adapted to be pivotally mounted relative to the first wall (11), respectively to the second wall (12), between the navigation position and the stowing position, and
- a plurality of first shrouds (91), respectively second shrouds (92), each shroud of the plurality of first shrouds (91), respectively second shrouds (92), being mounted on at least one of the spreader bars of the plurality of first spreader bars (81), respectively second spreader bars (82),
and wherein the rigid sail (10) comprises:
- a navigation configuration, in which the plurality of first spreader bars (81) and the plurality of second spreader bars (82) are in the navigation position, and
- a stowing configuration, in which the plurality of first spreader bars (81) and the plurality of second spreader bars (82) are in the stowing position.

7. The sailing propulsion assembly according to any one of the preceding claims, wherein the rigid sail (10) is pivotally mounted about a laying down pivot axis (P), a change in position of the rigid sail (10) between a hoisted position and a laid down position comprising a pivoting of the rigid sail (10) about the laying down pivot axis (P), in which in the hoisted position, the sail axis (A) is substantially perpendicular to a ship plane (100) formed by the laying down pivot axis (P) and a ship axis (N), and in the laid down position, the sail axis (A) is substantially parallel to the ship plane (100).

8. The sailing propulsion assembly according to claim 7, further comprising a base (20), the rigid sail (10) being mounted on the base (20), the base (20) comprising a rotating element (21) pivotally mounted about the sail axis (A) so that a pivoting of the rotating element (21) adjusts an incidence of the rigid sail (10) when the rigid sail (10) is in the hoisted position, in which the rigid sail (10) is mounted on the base (20) in a secured manner to the base (20) in rotation about the sail axis (A) when the rigid sail (10) is in the hoisted position and in a pivoting manner relative to the base (20) about the laying down pivot axis (P).

9. The sailing propulsion assembly according to any one of the preceding claims, further comprising at least one photovoltaic panel adapted to be mounted on the wall (11, 12) of the rigid sail (10).

10. A ship (100) comprising a sailing propulsion assembly according to any one of the preceding claims, said sailing propulsion assembly comprising one or several rigid sails (10).
